# EUROPÄISCHE PATENTANMELDUNG

(11) **EP 4 640 732 A1**
(43) Veröffentlichungstag der Anmeldung: **29.10.2025**
(21) Anmeldenummer: 24172566.2
(22) Anmeldetag: 25.04.2024
(51) Int. Cl.: C08G 18/22, C08G 18/24, C08G 18/42, C08G 18/73, C08G 18/80

(54) **EIN-KOMPONENTEN-SYSTEM FÜR BESCHICHTUNGEN**

(71) Anmelder: Covestro Deutschland AG, 51373 Leverkusen (DE)
(72) Erfinder: Darmandeh, Heidar, 40597 Düsseldorf (DE); Banh, Hung, 51371 Leverkusen (DE); Mayer, Wiebke, 51109 Köln (DE); Schmitz, Nico, 44289 Dortmund (DE)
(74) Vertreter: Levpat

(57) **Zusammenfassung**

Die Erfindung betrifft ein Ein-Komponenten-System für Beschichtungen, umfassend a) mindestens ein blockiertes Polyisocyanat, enthaltend zwei oder mehr 2-Carbamoylpropan-1,2,3-tricarboxylat-Strukturen, b) mindestens ein gegenüber Isocyanatgruppen reaktives Bindemittel mit im statistischen Mittel mindestens zwei isocyanatreaktiven Gruppen pro Molekül, c) gegebenenfalls Katalysatoren und d) gegebenenfalls Lösemittel und/oder gegebenenfalls Hilfs- und Zusatzstoffe. Weiterhin betrifft die Erfindung dessen Verwendung und Verfahren zur Herstellung von wässrigen, lösungsmittelfreien oder lösungsmittelhaltigen Lacken, Farben, Klebstoffen und Formkörpern und die entsprechenden Produkte.

## Beschreibung

Die vorliegende Erfindung betrifft ein Ein-Komponenten-System (im Folgenden auch 1K-System oder 1-K-PUR System genannt) für Beschichtungen sowie dessen Verwendung und Verfahren zur Herstellung von Lacken, Farben, Klebstoffen und Formkörper und die entsprechenden Produkte.

Die Anwendung von Blockierungsmitteln zur vorübergehenden Desaktivierung von Isocyanatgruppen ist seit langem bekannt. Blockierte Polyisocyanate werden unter anderem zur Herstellung von bei Raumtemperatur lagerstabilen 1-K-PUR-Systemen eingesetzt, die bei Erreichen der Deblockierungstemperatur des Blockierungsmittels beginnen zu vernetzen. Die blockierten Polyisocyanate werden dabei mit typischen Isocyanat-reaktiven Verbindungen umgesetzt. 1-K-PUR-Lacke werden heute im Can & Coil Coating, der Automobil-Erstlackierung oder der Kunststofflackierung eingesetzt. Je nach Anforderungsprofil kommen verschiedene Polyisocyanate auf Basis von aliphatischen Diisocyanaten zum Einsatz. Beispielhaft seien hier die linearaliphatischen Diisocyanate Hexamethylendiisocyanat (HDI) und Pentamethylendiisocyanat (PDI) oder die cycloaliphatischen Diisocyanate Isophorondiisocyanat (IPDI) und 4,4'-Diisocyanatodicyclohexylmethan ("H₁₂MDI") genannt.

Übersichtsartikel zum Einsatz von blockierten Polyisocyanaten und Ihren Eigenschaften finden sich beispielsweise in Wicks, Z. Progress in Organic Coatings 3 (1975) 73-99, Wicks, Z. Progress in Organic Coatings 9 (1981) 3-28, D. A. Wicks und Z. W. Wicks, Progress in Organic Coatings 36 (1999), 148-172.

Das Blockierungsmittel hat erheblichen Einfluss auf die Eigenschaften von 1-K-PUR Systemen. Beispielsweise beeinflusst das Blockierungsmittel unter anderem maßgeblich die Reaktivität (Deblockierungstemperatur), die Thermovergilbung, die Verträglichkeit oder die Viskosität der 1-K-PUR-Formulierung. (U. Meier-Westhues et al. "Polyurethanes: Coatings, Adhesives and Sealants", 2nd Revised Edition, pp 35 - 42 Hanover: Vincentz Network, 2019).

Die technisch relevantesten Blockierungsmittel sind ε-Caprolactam, Methyl-ethyl-ketoxim (im Folgenden auch Butanonoxim oder MEKO genannt), Malonsäurediethylester, sekundäre Amine sowie Triazol- und Pyrazolderivate, beispielsweise beschrieben in EP-A 0 576 952, EP-A 0 566 953, EP-A 0 159 117, US-A 4482 721, WO 97/12924 oder EP-A 0 744 423.

Polyisocyanate, die mit aliphatischen Alkoholen wie beispielsweise Methanol oder Ethanol blockiert sind, werden in der Regel auf Grund sehr hoher Einbrenntemperaturen (>180°C) nicht als Blockierungsmittel eingesetzt. Mit aromatischen Alkoholen, wie beispielsweise Phenol blockierte Polyisocyanate, weisen zwar niedrigere Einbrenntemperaturen als ihre aliphatischen Analoga auf (für Phenol ca. 150 °C), kommen jedoch aus Kompatibilitäts-, Löslichkeits- und Toxizitätsnachteilen nicht breit zum Einsatz.

Die am häufigsten eingesetzten Blockierungsmittel für Isocyanate sind ε-Caprolactam und MEKO. Während im Fall von ε-Caprolactam in der Regel Einbrenntemperaturen um 170°C oder höher angewandt werden, können blockierte 1K-PUR-Einbrennlacke, bei denen MEKO als Blockierungsmittel eingesetzt wurde, schon bei 10 bis 20°C niedrigeren Temperaturen eingebrannt werden. MEKO ist jedoch auf Grund seiner toxikologischen Eigenschaften von Nachteil.

Blockierte Polyisocyanate auf Basis linearaliphatischer Diisocyanate wie HDI und PDI neigen stark zur Kristallisation -und Verfestigung, sind jedoch auf Grund Ihres Eigenschaftsprofils unverzichtbar für hochqualitative PUR-Einbrennlacke. Mit ε-Caprolactam oder MEKO blockierte Polyisocyanate auf Basis linearaliphatischer Diisocyanate weisen (wegen Ihrer asymmetrischen Strukturen) zwar eine geringere Kristallisations- und Verfestigungstendenz im Vergleich zu anderen Blockierungsmittel auf, zeigen jedoch insbesondere in hoch-Festkörper-haltigen Formulierungen Nachteile im Hinblick auf verarbeitbare Viskositäten.

Des Weiteren basieren viele Blockierungsmittel gänzlich auf fossilen Rohstoffen, was ein weiterer Nachteil der im Stand der Technik bekannten Blockierungsmittel ist.

Der vorliegenden Erfindung lag daher die Aufgabe zugrunde, ein Ein-Komponenten-System für Beschichtungen bereitzustellen, das niedrigere Vernetzungs- bzw. Einbrenntemperaturen ermöglicht sowie eine deutlich geringere Vergilbungsneigung und eine mindestens gleichbleibende Lösungsmittel- und Wasserbeständigkeit als die mit ε-Caprolactam oder MEKO blockierten Ein-Komponenten-Systeme zeigt.

Diese Aufgabe konnte gelöst werden durch Bereitstellung eines Ein-Komponenten-Systems für Beschichtungen, umfassend
a) mindestens ein blockiertes Polyisocyanat, enthaltend zwei oder mehr 2-Carbamoylpropan-1 ,2,3- tricarboxylat-Strukturen,
b) mindestens ein gegenüber Isocyanatgruppen reaktives Bindemittel mit im statistischen Mittel mindestens zwei isocyanatreaktiven Gruppen pro Molekül,
c) gegebenenfalls Katalysatoren und
d) gegebenenfalls Lösemittel und/oder gegebenenfalls Hilfs- und Zusatzstoffe.

Überraschenderweise wurde gefunden, dass Triester der Citronensäure (im Rahmen der Erfindung auch "Citrate" genannt) als Blockierungsmittel für Isocyanate eingesetzt werden können und neben einer geringeren Viskosität noch die weiteren Vorteile einer niedrigen Vernetzungs- bzw. Einbrenntemperatur, sowie einer mindestens gleichbleibende Lösungsmittel- und Wasserbeständigkeit und eine deutlich geringere Vergilbungsneigung aufweisen.

Bevorzugt bedeuten die Ausdrücke "umfassend" oder "enthaltend", "im Wesentlichen bestehend aus" und besonders bevorzugt "bestehend aus". Die in den Patentansprüchen und in der Beschreibung genannten weiteren Ausführungsformen können beliebig kombiniert werden, sofern sich aus dem Kontext nicht eindeutig das Gegenteil ergibt.

"Mindestens ein", wie hierin verwendet, bezieht sich auf 1 oder mehr, beispielsweise 2, 3, 4, 5, 6, 7, 8, 9 oder mehr. Im Zusammenhang mit Bestandteilen der hierin beschriebenen Verbindungen bezieht sich diese Angabe nicht auf die absolute Menge an Molekülen, sondern auf die Art des Bestandteils. "Mindestens ein blockiertes Polyisocyanat" bedeutet daher beispielsweise, dass nur eine Art von blockiertem Polyisocyanat oder mehrere verschiedene Arten von blockierten Polyisocyanaten, ohne Angaben über die Menge der einzelnen Verbindungen zu machen, enthalten sein können.

Zahlenwerte, die hierin ohne Dezimalstellen angegeben sind, beziehen sich jeweils auf den vollen angegebenen Wert mit einer Dezimalstelle. So steht beispielsweise "99 %" für "99,0 %".

Numerische Bereiche, die in dem Format "in/von x bis y" angegeben sind, schließen die genannten Werte ein. Wenn mehrere bevorzugte numerische Bereiche in diesem Format angegeben sind, ist es selbstverständlich, dass alle Bereiche, die durch die Kombination der verschiedenen Endpunkte entstehen, ebenfalls erfasst werden.

Vorliegend ist der Begriff "aliphatisch" definiert als nicht-aromatische Kohlenwasserstoffgruppen, die verzweigt oder unverzweigt und jeweils gesättigt oder ungesättigt sind.

Vorliegend ist der Begriff "alicyclisch" oder "cycloaliphatisch" als gegebenenfalls substituierte, carbocyclische oder heterocyclische Verbindungen oder Einheiten definiert ist, die nicht aromatisch sind (wie z.B. Cycloalkane, Cycloalkene oder Oxa-, Thia-, Aza- oder Thiazacycloalkane). Besondere Beispiele sind Cyclohexylgruppen, Cyclopentylgruppen und ihre N- oder O-heterocyclischen Derivate wie z.B. Pyrimidin, Pyrazin, Tetrahydropyran oder Tetrahydrofuran.

Vorliegend ist der Begriff "araliphatisch" definiert als aliphatische Kohlenwasserstoffreste, die gesättigt oder ungesättigt sind und mindestens einen aromatischen Substituenten aufweisen.

Für den Fall, dass die Gruppen oder Verbindungen als "gegebenenfalls substituiert" oder "substituiert" offenbart werden, sind geeignete Substituenten -F, -Cl, -Br, -I, -OH, -OCH3, OCH2CH3, -O-Isopropyl oder -O-n-Propyl, -OCF3, -CF3, -S-C1-6-Alkyl und/oder (gegebenenfalls über ein angehängtes Heteroatom) eine lineare oder verzweigte, aliphatische und/oder alicyclische Struktureinheit mit 1 bis 12 Kohlenstoffatomen, die jeweils als Ersatz für ein kohlenstoffgebundenes Wasserstoffatom des betreffenden Moleküls fungiert. Bevorzugte Substituenten sind Halogen (insbesondere -F, -Cl), C1-6-Alkoxy (insbesondere Methoxy und Ethoxy), Hydroxy, Trifluormethyl und Trifluormethoxy, die jeweils als Ersatz für ein an Kohlenstoff gebundenes Wasserstoffatom des betreffenden Moleküls fungieren.

Polyisocyanate A) für das mindestens eine blockierte Polyisocyanat a) sind beliebige Diisocyanate, Triisocyanate und/oder Polyisocyanate mit aliphatisch, cycloaliphatisch, araliphatisch und/oder aromatisch gebundenen Isocyanatgruppen.

Geeignete Diisocyanate und Triisocyanate A) sind beliebige, auf verschiedene Weise, beispielsweise durch Phosgenierung der korrespondierenden Diamine oder Triamine, die sowohl unter Verwendung fossiler Rohstoffe oder auch aus nachwachsenden Rohstoffen, gegebenenfalls massenbilanziert hergestellt werden können, in der Flüssig- oder Gasphase oder auf phosgenfreien Weg, wie z. B. durch thermische Urethanspaltung, zugängliche Diisocyanate und Triisocyanate, vorzugsweise solche des Molekulargewichtsbereichs 140 bis 400 mit aliphatisch, cycloaliphatisch, araliphatisch und/oder aromatisch gebundenen Isocyanatgruppen, wie z. B. 1,4-Diisocyanatobutan, 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan, 1,9-Diisocyanatononan 1,10-Diisocyanatodecan, 1,3- und 1,4-Diisocyanatocyclohexan, 1,3-und 1,4-Bis-(isocyanatomethyl)-cyclohexan, 1-Isocyanato-3,3,5-trimethyl-5-isocyanatomethylcyclohexan (Isophorondiisocyanat, IPDI), 2,4'- und 4,4'-Diisocyanatodicyclohexylmethan (H₁₂-MDI), 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanatoadamantan, 1,3-Dimethyl-5,7-diisocyanatoadamantan, 1-lsocyanato-1-methyl-4(3)isocyanatomethylcyclohexan, Bis-(isocyanatomethyl)-norbornan (NBDI), 4-Isocyanatomethyl-1,8-octandiisocyanat (Triisocyanatononan; TIN), 1,3- und 1,4-Bis(isocyanatomethyl)benzol (Xylylendiisocyanat, XDI), 1,3- und 1,4-Bis-(2-isocyanato-prop-2-yl)-benzol (TMXDI), 1,3-Bis(isocyanatomethyl)-4-methylbenzol, 1,3-Bis(isocyanatomethyl)-4-ethylbenzol, 1,3-Bis(isocyanatomethyl)-5-methylbenzol, 1,3-Bis(isocyanatomethyl)-4,5-dimethylbenzol, 1,4-Bis(isocyanatomethyl)-2,5-dimethylbenzol, 1,4-Bis(isocyanatomethyl)-2,3,5,6-tetramethylbenzol, 1,3-Bis(isocyanatomethyl)-5-tert.-butylbenzol, 1,3-Bis(isocyanatomethyl)-4-chlorbenzol, 1,3-Bis(isocyanatomethyl)-4,5-dichlorbenzol, 1,3-Bis(isocyanatomethyl)-2,4,5,6-tetrachlorbenzol, 1,4-Bis(isocyanatomethyl)-2,3,5,6-tetrachlorbenzol, 1,4-Bis(isocyanatomethyl)-2,3,5,6-tetrabrombenzol, 1,4-Bis(2-isocyanatoethyl)benzol und 1,4-Bis(isocyanatomethyl)naphthalin, 1,2-, 1,3- und 1,4-Diisocyanatobenzol (Phenylendiisocyanat), 2,4- und 2,6-Diisocyanatotoluol (TDI), 2,3,5,6-Tetramethyl-1,4-diisocyanatobenzol, die isomeren Diethylphenylendiisocyanate, Diisopropylphenylendiisocyanate, Diisododecylphenylendiisocyanate und Biphenyldiisocyanate, 3,3'-Dimethoxybiphenyl-4,4'-diisocyanat, 2,2'-, 2,4'- und 4,4'-Diisocyanatodiphenylmethan (MDI), 3,3'-Dimethyldiphenylmethan-4,4'-diisocyanat, 4,4'-Diisocyanatodiphenylethan, 1,5-Diisocyanatonaphthalin (Naphthylendiisocyanat, NDI), Diphenyletherdiisocyanat, Ethylenglycoldiphenyletherdiisocyanat, Diethylenglycoldiphenyletherdiisocyanat, 1,3-Propylenglycoldiphenyletherdiisocyanat, Benzophenondiisocyanat, Triisocyanatobenzol, 2,4,6-Triisocyanatotoluol, Trimethylbenzoltriisocyanat, Diphenylmethan-2,4,4'-triisocyanat, 3-Methyldiphenylmethan-4,6,4'-triisocyanat, die isomeren Naphthalintriisocyanate und Methylnaphthalindiisocyanate, Triphenylmethantriisocyanat, 2,4-Diisocyanato-1-[(5-isocyanato-2-methylphenyl)methyl]benzol oder Mischungen aus mindestens zwei solcher Diisocyanate und Triisocyanate.

Geeignete Polyisocyanate A) sind beliebige, durch Modifizierung einfacher aliphatischer, cycloaliphatischer, araliphatischer und/oder aromatischer Diisocyanate und/oder Triisocyanate, beispielsweise solcher der vorstehend genannten Art, hergestellte Polyisocyanate mit Uretdion-, Isocyanurat-, Allophanat-, Biuret-, Iminooxadiazindion- und/oder Oxadiazintrionstruktur, wie sie beispielsweise in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 oder in EP-A 0 336 205, EP-A 0 339 396 EP-A 0 798 299, EP-A 0 962 454, EP-A 0 962 455, EP-A 2 785 760, EP-A 2 883 895, EP-A 3 107 922, EP-A 3 107 948 und EP-A 3 337 836 beispielhaft beschrieben sind oder um beliebige Gemische solcher Polyisocyanate.

Gegebenenfalls können bei der Modifizierung der genannten Diisocyanate und/oder Triisocyanate zu Polyisocyanaten A) in untergeordneten Mengen auch Monoisocyanate, insbesondere solche des Molekulargewichtsbereichs 99 bis 300, wie z. B. n-Butylisocyanat, n-Amylisocyanat, n-Hexylisocyanat, n-Heptylisocyanat, n-Octylisocyanat, Undecylisocyanat, Dodecylisocyanat, Tetradecylisocyanat, Cetylisocyanat, Stearylisocyanat, Cyclopentylisocyanat, Cyclohexylisocyanat, 3- bzw. 4-Methylcyclohexylisocyanat, Benzylisocyanat, Phenylisocyanat oder Naphtylisocyanat, mitverwendet werden. Falls überhaupt kommen Monoisocyanate dabei in Mengen von bis 30 Gew.-%, vorzugsweise bis zu 20 Gew.-%, besonders bevorzugt bis zu 10 Gew.-%, bezogen auf die Gesamtmenge an Mono-, Di- und Triisocyanaten, zum Einsatz.

Bei der Herstellung der Polyisocyanate A) schließt sich an die eigentliche Modifizierungsreaktion in der Regel ein weiterer Verfahrensschritt zur Abtrennung der nicht umgesetzten überschüssigen monomeren Diisocyanate und/oder Triisocyanate und gegebenenfalls Monoisocyanate an. Diese Monomerenabtrennung erfolgt nach an sich bekannten Verfahren vorzugsweise durch Dünnschichtdestillation im Vakuum oder durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan.

In einer ersten bevorzugten Ausführungsform des erfindungsgemäßen Ein-Komponenten-Systems enthält das blockierte Polyisocyanat a) zusätzlich eine oder mehrere Isocyanurat-, Allophanat-, Urethan-, Harnstoff-, Uretdion-, Iminooxadiazindion-, Oxadiazintrion- und/oder Biuretstruktur.

Bevorzugt kommen als Ausgangsmaterial des blockierten Polyisocyanat a) als Polyisocyanat A) Polyisocyanate, bevorzugt Polyisocyanate der genannten Art, zum Einsatz, die einen Gehalt an Isocyanatgruppen von 6,0 bis 26,0 Gew.-%, vorzugsweise von 8,0 bis 25,0 Gew.-%, besonders bevorzugt 10,0 bis 24,0 Gew.-%, und/odereinen Gehalt an monomeren Diisocyanaten von weniger als 0,50 Gew.-%, vorzugsweise weniger als 0,30 Gew.-%, stärker bevorzugt weniger als 0,20 Gew.-%, besonders bevorzugt von weniger als 0,10 Gew.-% aufweisen. Für den alternativen, optionalen Fall, dass Triisocyanate und/oder Monoisocyanate zur Herstellung der Polyisocyanate A) eingesetzt wurden, beziehen sich die vorstehend genannten Rest-Monomeren Gehalte von weniger als 0,50 Gew.-%, vorzugsweise weniger als 0,30 Gew.-%, stärker bevorzugt weniger als 0,20 Gew.-%, besonders bevorzugt von weniger als 0,10 Gew.-% auf alle eingesetzten Diisocyanate, Triisocyanate und Monoisocyanate. Die NCO-Gehalte werden nach DIN EN ISO 11909:2007-05, die Rest-Monomeren Gehalte nach DIN EN ISO 10283:2007-11 gaschromatographisch mit internem Standard bestimmt.

Besonders bevorzugte Polyisocyanate A) sind solche der genannten Art mit ausschließlich aliphatisch und/oder cycloaliphatisch gebundenen Isocyanatgruppen.

Ganz besonders bevorzugte Polyisocyanate A) sind mindestens Isocyanuratstrukturen enthaltende Polyisocyanate auf Basis von 1,5-Diisocyanatopentan, 1,6-Diisocyanatohexan, 1-Isocyanato-3,3,5-trimethyl-5-isocyanatomethylcyclohexan, 1,3-Bis(isocyanatomethyl)-benzol, Bis-(isocyanatomethyl)-norbornan und/oder 4,4'-Diisocyanatodicyclohexylmethan.

Alternativ oder in Kombination weisen die Polyisocyanate A) bevorzugt eine mittlere NCO-Funktionalität von 2,0 bis 5,0, vorzugsweise von 2,5 bis 4,5, auf. Die mittleren NCO-Funktionalitäten werden mittels Gelpermeationschromatographie bestimmt.

Bevorzugt ist der freie NCO-Gehalt des blockierten Polyisocyanates a) ≤ 5 Gew.-%, bevorzugt ≤ 2 Gew.-%, besonders bevorzugt ≤ 1 Gew.-%, noch stärker bevorzugt ≤ 0,5 Gew.-% und ganz besonders bevorzugt ≤ 0,3 Gew.-%, bestimmt mittels Titration nach DIN EN ISO 11909:2007-05 und bezogen auf das Gesamtgewicht des blockierten Polyisocyanates a).

Die blockierten Polyisocyanate a) können beispielsweise mittels NMR-Spektrometrie oder HPLC-MS durch qualitative und quantitative Bestimmung der 2-Carbamoylpropan-1,2,3-tricarboxylat-Strukturen identifiziert werden.

In einer weiteren bevorzugten Ausführungsform des erfindungsgemäßen Ein-Komponenten-Systems weisen die zwei oder mehr 2-Carbamoylpropan-1,2,3-tricarboxylat-Strukturen des blockierten Polyisocyanates a) eine allgemeine Formel (I), 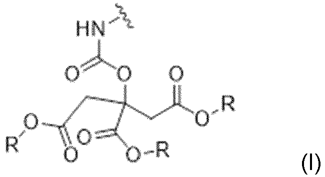 auf, in welcher R unabhängig voneinander für einen beliebigen gesättigten oder ungesättigten, linearen oder verzweigten, aliphatischen Rest mit 1 bis 18 Kohlenstoffatomen, gesättigten oder ungesättigten cycloaliphatischen Rest mit 3 bis 18 Kohlenstoffatomen, araliphatischen Rest mit 7 bis 18 Kohlenstoffatomen und/oder aromatischen Rest mit 6 bis 18 Kohlenstoffatomen steht, der jeweils substituiert oder unsubstituiert ist und/oder Heteroatome in der Kette aufweist.

In einer weiteren bevorzugten Ausführungsform des erfindungsgemäßen Ein-Komponenten-Systems weisen die zwei oder mehr 2-Carbamoylpropan-1,2,3-tricarboxylat-Strukturen des blockierten Polyisocyanates a) eine allgemeine Formel (I), 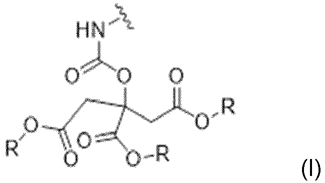 auf, in welcher R unabhängig voneinander für einen beliebigen gesättigten oder ungesättigten, linearen oder verzweigten, aliphatischen Rest mit 1 bis 8 Kohlenstoffatomen und/oder gesättigten oder ungesättigten cycloaliphatischen Rest mit 5 bis 8 Kohlenstoffatomen steht, der jeweils substituiert oder unsubstituiert ist und/oder Heteroatome in der Kette aufweist, vorzugsweise in welcher R unabhängig voneinander für einen beliebigen gesättigten oder ungesättigten, linearen oder verzweigten, aliphatischen Rest mit 1 bis 4 Kohlenstoffatomen steht, der jeweils substituiert oder unsubstituiert ist und/oder Heteroatome in der Kette aufweist, besonders bevorzugt in welcher R unabhängig voneinander für einen beliebigen gesättigten oder ungesättigten, linearen oder verzweigten, aliphatischen Rest mit 2 bis 4 Kohlenstoffatomen steht.

Die Carbamoylpropan-1,2,3-tricarboxylat-Strukturen und damit auch die Strukturen der allgemeinen Formel (I) stellen die blockierten NCO-Gruppen dar, wobei ein entsprechendes Citrat als Blockierungsmittel fungiert. Da Blockierungsmittel stets in großer Menge eingesetzt werden, um im Wesentlichen alle freien Isocyanatgruppen zu blockieren, bieten die Citrate den ökologischen Vorteil großtechnisch aus (teilweise) bio-basierten Rohstoffen zugänglich zu sein.

Das blockierte Polyisocyanat a) lässt sich herstellen durch ein Herstellverfahren, umfassend eine Umsetzung von mindestens einem Polyisocyanat A) mit mindestens einem Citrat B) gegebenenfalls in Gegenwart mindestens eines Katalysators, wobei das Citrat B) in einer Menge von ≥ 95 Äquivalent-% bezogen auf die Isocyanatgruppen des Polyisocyanates A) eingesetzt wird.

Die geeigneten und bevorzugten Polyisocyanate A) sind die vorstehend beschriebenen. Bevorzugt beim Herstellverfahren weist das mindestens eine Polyisocyanat A) aliphatisch, cycloaliphatisch, araliphatisch und/oder aromatisch gebundene Isocyanatgruppen auf und/oder umfasst bevorzugt ein oder mehrere Isocyanuratstrukturen enthaltende Polyisocyanate auf Basis von 1,5-Diisocyanatopentan, 1,6-Diisocyanatohexan, 1-Isocyanato-3,3,5-trimethyl-5-isocyanatomethylcyclohexan, 1,3-Bis(isocyanatomethyl)-benzol, Bis-(isocyanatomethyl)-norbornan und/oder 4,4'-Diisocyanatodicyclohexylmethan.

Bevorzugt wird das Citrat B) in einer Menge von ≥ 98 Äquivalent-%, besonders bevorzugt ≥ 99 Äquivalent-%, noch stärker bevorzugt ≥ 99,5 Äquivalent-% und am stärksten bevorzugt ≥ 99,7 Äquivalent-%, bezogen auf die Isocyanatgruppen des Polyisocyanates A), eingesetzt.

Das mindestens eine Citrat B) kann aus verschiedenen Verbindungen gewählt werden. Bevorzugt beim Herstellverfahren ist das mindestens eine Citrat B), eines der allgemeinen Formel (II), 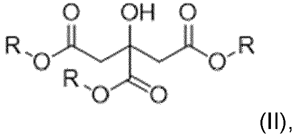 in welcher
- R: unabhängig voneinander für einen beliebigen gesättigten oder ungesättigten, linearen oder verzweigten, aliphatischen Rest mit 1 bis 18 Kohlenstoffatomen, gesättigten oder ungesättigten cycloaliphatischen Rest mit 3 bis 18 Kohlenstoffatomen, araliphatischen Rest mit 7 bis 18 Kohlenstoffatomen und/oder aromatischen Rest mit 6 bis 18 Kohlenstoffatomen steht, der jeweils substituiert oder unsubstituiert ist und/oder Heteroatome in der Kette aufweist.

Besonders bevorzugt beim Herstellverfahren ist das mindestens eine Citrat B), eines der allgemeinen Formel (II), 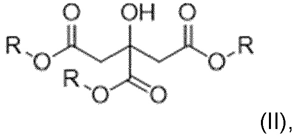 in welcher
- R: unabhängig voneinander für einen beliebigen gesättigten oder ungesättigten, linearen oder verzweigten, aliphatischen Rest mit 1 bis 8 Kohlenstoffatomen und/oder gesättigten oder ungesättigten cycloaliphatischen Rest mit 5 bis 8 Kohlenstoffatomen steht, der jeweils substituiert oder unsubstituiert ist und/oder Heteroatome in der Kette aufweist, vorzugsweise in welcher R unabhängig voneinander für einen beliebigen gesättigten oder ungesättigten, linearen oder verzweigten, aliphatischen Rest mit 1 bis 4 Kohlenstoffatomen steht, der jeweils substituiert oder unsubstituiert ist und/oder Heteroatome in der Kette aufweist, besonders bevorzugt in welcher R unabhängig voneinander für einen beliebigen gesättigten oder ungesättigten, linearen oder verzweigten, aliphatischen Rest mit 2 bis 4 Kohlenstoffatomen steht.

Beispielhafte geeignete und bevorzugte Citrate B) sind Trimethylcitrat, Triethylcitrat, Tri-n-propylcitrat, Tri-iso-propylcitrat, Tri-n-butylcitrat, Tri-sec-butylcitrat, Tri-iso-butylcitrat, Tri-tert-butylcitrat, Tri-n-pentylcitrat, Tri(2-pentyl)citrat, Tri(3-pentyl)citrat, Tri(2-methyl-1-butyl)citrat , Tri(2-methyl-2-butyl)citrat, Tri-(3-methyl-1-butyl)citrat, Tri(3-methyl-2-butyl)citrat, Tri(2,2-Dimethyl-1-propyl)citrat, Tri-n-hexylcitrat, Tri(2-hexyl)citrat, Tri(3-hexyl)citrat, Tri(2-methyl-1-pentyl)citrat, Tri(2-methyl-2-pentyl)citrat, Tri(2-methyl-3-pentyl)citrat, Tri(4-methyl-1-pentyl)citrat, Tri(4-methyl-2-pentyl)citrat, Tri(3-methyl-1-pentyl)citrat, Tri(3-methyl-2-pentyl)citrat, Tri(3-methyl-3-pentyl)citrat, Tri(2,2-dimethyl-1-butyl)citrat, Tri(3,3-dimethyl-1-butyl)citrat, Tri(3,3-dimethyl-2-butyl)citrat, Tri(2,3-dimethyl-1-butyl)citrat, Tri(2,3-dimethyl-2-butyl)citrat, Tri(2-ethyl-1-butyl)citrat, Tri-n-heptylcitrat, Tri-(2-heptyl)citrat, Tri-(3-heptyl)citrat, Tri-(4-heptyl)citrat, Tri(5-methyl-1-hexyl)citrat, Tri(5-methyl-2-hexyl)citrat, Tri(5-methyl-3-hexyl)citrat, Tri(2-methyl-3-hexyl)citrat, Tri(2-methyl-2-hexyl)citrat, Tri(2-methyl-1-hexyl)citrat, Tri(4-methyl-1-hexyl)citrat, Tri(4-methyl-2-hexyl)citrat, Tri(4-methyl-3-hexyl)citrat, Tri(3-methyl-3-hexyl)citrat, Tri(3-methyl-2-hexyl)citrat, Tri(3-methyl-1-hexyl)citrat, Tri(2-ethyl-1-pentyl)citrat, Tri(3-ethyl-1-pentyl)citrat, Tri(3-ethyl-2-pentyl)citrat, Tri(3-ethyl-3-pentyl)citrat, Tri(3,4-dimethyl-1-pentyl)citrat, Tri(3,4-dimethyl-2-pentyl)citrat, Tri(2,3-dimethyl-1-pentyl)citrat, Tri(2,3-dimethyl-2-pentyl)citrat,Tri(2,3-dimethyl-3-pentyl)citrat, Tri(2-isopropyl-1-butyl)citrat, Tri(2,3,3-trimethyl-1-butyl)citrat); Tri(2,2,3-trimethyl-1-butyl)citrat); Tri(2,3,3-trimethyl-2-butyl)citrat), Tri(3,3-dimethyl-1-pentyl)citrat, Tri(3,3-dimethyl-2-pentyl)citrat, Tri(2-ethyl-2methyl-1-butyl)citrat, Tri(4,4-dimethyl-1-pentyl)citrat, Tri(4,4-dimethyl-2-pentyl)citrat, Tri(2,2-dimethyl-1-pentyl)citrat, Tri-n-octylcitrat, Tri(2-octyl)citrat, Tri(3-octyl)citrat), Tri(4-octyl)citrat, Tri(2-methyl-1-heptyl)citrat, Tri(2-methyl-2-heptyl)citrat, Tri(2-methyl-3-heptyl)citrat, Tri(2-methyl-4-heptyl)citrat, Tri(3-methyl-1-heptyl)citrat, Tri(3-methyl-2-heptyl)citrat, Tri(3-methyl-3-heptyl)citrat, Tri(3-methyl-4-heptyl)citrat, Tri(4-methyl-1-heptyl)citrat,, Tri(4-methyl-3-heptyl)citrat, Tri(4-methyl-4-heptyl)citrat, Tri(5-methyl-1-heptyl)citrat, Tri(5-methyl-2-heptyl)citrat, Tri(5-methyl-3-heptyl)citrat, Tri(6-methyl-1-heptyl)citrat, Tri(6-methyl-2-heptyl)citrat, Tri(6-methyl-3-heptyl)citrat, Tri(2,2-dimethyl-1-hexyl)citrat, Tri(2,2-dimethyl-3-hexyl)citrat, Tri(2,3-dimethyl-1-hexyl)citrat , Tri(2,3-dimethyl-2-hexyl)citrat, Tri(2,3-dimethyl-3-hexyl)citrat, Tri(2,4-dimethyl-1-hexyl)citrat, Tri(2,4-dimethyl-2-hexyl)citrat, Tri(2,4-dimethyl-3-hexyl)citrat Tri(2,5-dimethyl-1-hexyl)citrat, Tri(2,5-dimethyl-2-hexyl)citrat, Tri(2,5-dimethyl-3-hexyl)citrat, Tri(3,3-dimethyl-1-hexyl)citrat, Tri(3,3-dimethyl-2-hexyl)citrat, Tri(3,4-dimethyl-1-hexyl)citrat, Tri(3,4-dimethyl-2-hexyl)citrat, Tri(3,4-dimethyl-3-hexyl)citrat, Tri(3,5-dimethyl-1-hexyl)citrat, Tri(3,5-dimethyl-2-hexyl)citrat,Tri(3,5-dimethyl-3-hexyl)citrat, Tri(4,4-dimethyl-1-hexyl)citrat, Tri(4,4-dimethyl-2-hexyl)citrat, Tri(4,4-dimethyl-3-hexyl)citrat, Tri(4,5-dimethyl-1-hexyl)citrat, Tri(4,5-dimethyl-2-hexyl)citrat, Tri(4,5-dimethyl-3-hexyl)citrat, Tri(5,5-dimethyl-1-hexyl)citrat, Tri(5,5-dimethyl-2-hexyl)citrat, Tri(5,5-dimethyl-3-hexyl)citrat, Tri(2-ethyl-1-hexyl)citrat, Tri(3-ethyl-1-hexyl)citrat, Tri(3-ethyl-2-hexyl)citrat, Tri(3-ethyl-3-hexyl)citrat, Tri(4-ethyl-1-hexyl)citrat, Tri(4-ethyl-2-hexyl)citrat, Tri(4-ethyl-3-hexyl)citrat, Tri(2-propyl-1-pentyl)citrat, Tri(2-ethyl-2-methyl-1-pentyl)citrat, Tri(2-ethyl-3-methyl-1-pentyl)citrat, Tri(2-ethyl-4-methyl-1-pentyl)citrat, Tri(3-ethyl-2-methyl-1-pentyl)citrat, Tri(3-ethyl-2-methyl-2-pentyl)citrat, Tri(3-ethyl-2-methyl-3-pentyl)citrat, , Tri(3-ethyl-3-methyl-1-pentyl)citrat, , Tri(3-ethyl-3-methyl-2-pentyl)citrat, Tri(3-ethyl-4-methyl-1-pentyl)citrat, Tri(3-ethyl-4-methyl-2-pentyl)citrat, Tri(2,2,3-trimethyl-1-pentyl)citrat), Tri(2,2,3-trimethyl-2-pentyl)citrat), Tri(2,2,3-trimethyl-3-pentyl)citrat) , Tri(2,2,4-trimethyl-1-pentyl)citrat), Tri(2,2,4-trimethyl-3-pentyl)citrat), Tri(2,3,3-trimethyl-1-pentyl)citrat), Tri(2,3,3-trimethyl-2-pentyl)citrat), Tri(2,3,4-trimethyl-1-pentyl)citrat), Tri(2,3,4-trimethyl-2-pentyl)citrat), Tri(2,3,4-trimethyl-3-pentyl)citrat), Tri(2,4,4-trimethyl-1-pentyl)citrat), Tri(2,4,4-trimethyl-2-pentyl)citrat), Tri(3,3,4-trimethyl-1-pentyl)citrat), Tri(3,3,4-trimethyl-2-pentyl)citrat), Tri(3,4,4-trimethyl-1-pentyl)citrat), Tri(3,4,4-trimethyl-2-pentyl)citrat),Tri(2-Ethyl-2,3-dimethyl-1-butyl)citrat, Tri(2-Ethyl-3,3-dimethyl-1-butyl)citrat, Tri(3-methyl-2-(1-methylethyl)-1-butyl)citrat, Tri(2,2-diethyl-1-butyl)citrat, Tri(2,2,3,3-Tetramethyl-1-butyl)citrat, Trivinylcitrat, Triallylcitrat, Tri(2-(acryloyloxy)ethyl)citrat,Tri(2-(Methacryloyloxy)ethyl)citrat, Tribenzylcitrat, Triphenylcitrat Tricyclopropylcitrat, Tricyclobutylcitrat, Tricyclopentylcitrat, Tricyclohexylcitrat, Tricycloheptylcitrat, Tricyclooctylcitrat und Mischungen der vorgenannten.

Besonders bevorzugte Citrate B) sind Trimethylcitrat, Triethylcitrat, Tripropylcitrat, Triisopropylcitrat, Tri-n-butylcitrat, Tri-sec-butylcitrat, Tri-iso-butylcitrat, Tri-tert-butylcitrat, Tri-n-pentylcitrat, Tri-n-hexylcitrat, Tri-n-octylcitrat, Tri(2-ethyl-1-hexyl)citrat und Mischungen der vorgenannten und ganz besonders bevorzugte Citrate B) sind Trimethylcitrat, Triethylcitrat, Tributylcitrat und Mischungen der vorgenannten.

Falls erwünscht können die genannten Citrate B) auch mischverestert sein, beispielsweise Diethyl-methylcitrat oder Butyl-diethylcitrat.

Da die Citrate B) mit den Isocyanatgruppen die 2-Carbamoylpropan-1,2,3-tricarboxylat-Strukturen der blockierten Polyisocyanate a) bilden, sind die 2-Carbamoylpropan-1,2,3-trimethoxylat-Strukturen, 2-Carbamoylpropan-1,2,3-triethoxylat-Strukturen, 2-Carbamoylpropan-1,2,3-tributoxylat-Strukturen und Mischungen der vorgenannten ganz besonders bevorzugte Strukturen und ganz besonders bevorzugte Ausführungsformen der allgemeinen Formel (I).

Citronensäureester wie beispielsweise das Triethylcitrat sind im Gegensatz zu den aus dem Stand der Technik bekannten Blockierungsmittel nicht toxisch, reizend oder anderweitig gesundheitsschädlich.

Zur Durchführung des Herstellverfahrens wird das mindestens eine Polyisocyanat A) mit dem mindestens einen Citrat B) vorzugsweise bei Temperaturen von 20 bis 120 °C, besonders bevorzugt von 40 bis 100 °C zum blockierten Polyisocyanat a) umgesetzt.

Die Blockierungsreaktion im Herstellverfahren kann thermisch induziert ohne Katalysator durchgeführt werden oder in Gegenwart mindestens einen Katalysators. Bevorzugt wird die Umsetzung in Gegenwart mindestens ein Katalysator durchgeführt. Hieraus ergibt sich der Vorteil, dass die Effizienz und Wirtschaftlichkeit des Herstellverfahrens weiter erhöht wird.

Geeignete Katalysatoren sind tertiäre Amine, wie Triethylamin, Pyridin, Methylpyridin, 1,4-Diazabicyclo[2.2.2]octan, 1,8-Diazabicyclo[5.4.0]undec-7-en, 1,5-Diazabicyclo[4.3.0]non-5-en, 4-(Dimethylamino)pyridin, Benzyldimethylamin, N,N-Endoethylenpiperazin, N-Methylpiperidin, Pentamethyldiethylentriamin, N,N-Dimethylaminocyclohexan, N,N'-Dimethyl-piperazin, aber auch Metallsalze und -chelate, Salze von Übergangsmetallen, Halbmetallen oder anorganische Basen, wie beispielsweise Kaliumcarbonat. Als katalytisch wirkende Metallionen werden vorzugsweise Eisen(III)-, Bismuth(III)-, Zink(II)-, Zinn(II), Zinn (IV)-, Zirkonium(IV)-,Titan(IV)-, Molybdän(VI)- und Al(III) eingesetzt werden. Beispielhaft lassen sich Eisen(III)chlorid, Bismuth(III)-octoat, Bismuth(III)-triflat, Bismuth(III)-neodecanoat, Alumnium-tri(ethylacetoacetat), Zink(II)chlorid, Zink(II)n-octanoat, Zink(II)-2-ethyl-1-hexanoat, Zink-2-ethylcaproat, Zink(II)-stearat, Zink(II)-naphtenat, Zink(II)acetylacetonat, Zinn(II)-n-octanoat, Zinn(II)-2-ethyl-1-hexanoat, Zinn(II)-ethylcaproat, Zinn(II)-laurat, Zinn(II)-palmitat), Zinn(II)-triflat, Zinn(II)-chlorid, Dibutyl-zinn(IV)oxid, Dibutylzinn(IV)-dichlorid, Dibutylzinn(IV)-diacetat, Dibutylzinn(IV)-dimaleat, Dibutlyzinn(IV)-dilaurat, Dioctylzinn(IV)-diacetat, Molybdänglykolat, Tetraisopropyltitanat, Tetrabutylitanat, Titan(IV)acetylacetonat, Zirconium(IV)-neodecanoat, Aluminium-tri-sec-butylat, Aluminium(III)-acetylacetonat, Aluminium(III)-triflat oder beliebige Mischungen solcher Katalysatoren verwendet werden.

Der gegebenenfalls anwesende mindestens eine Katalysator ist im Herstellverfahren vorzugsweise in Mengen von 1 bis 10000 ppm, bevorzugt 2 bis 5000 ppm, besonders bevorzugt von 5 bis 1000 ppm und ganz besonders bevorzugt von 10 bis 250 ppm zugegen.

Bei den vorgenannten Metallionen enthaltenden Katalysatoren ist ein weiterer Vorteil, dass sich diese in den blockierten Polyisocyanaten a) und dem erfindungsgemäßen Ein-Komponenten-System qualitativ und quantitativ beispielsweise mittels ICP-OES oder ICP- MS messen lassen.

Das Herstellverfahren kann lösemittelfrei durchgeführt werden. Gegebenenfalls können aber auch geeignete, gegenüber den reaktiven Gruppen der Polyisocyanate A) inerte Lösemittel mitverwendet werden. Hierfür geeignet sind sowohl unter Verwendung fossiler Rohstoffe oder auch aus nachwachsenden Rohstoffen hergestellte Lösemittel, insbesondere die an sich bekannten üblichen Lacklösemittel, wie z. B. Ethylacetat, Butylacetat, Ethylenglykolmonomethyl- oder -ethyletheracetat, 1-Methoxypropyl-2-acetat, 3-Methoxy-n-butylacetat, Ethyl(-)-L-Lactat, Aceton, 2-Butanon, 4-Methyl-2-pentanon, Cyclohexanon, Dihydrolevoglucosenon, Toluol, Xylol, Chlorbenzol, Testbenzin, höher substituierte Aromaten, wie sie beispielsweise unter den Bezeichnungen Solventnaphtha, Solvesso^{®}, Isopar^{®}, Nappar^{®}, Varsol^{®} (ExxonMobil Chemical Central Europe, Köln, DE) und Shellsol^{®} (Shell Deutschland Oil GmbH, Hamburg, DE) im Handel sind, aber auch Lösemittel wie Dimethylfuran, 2-Methyltetrahydrofuran, Dimethylisosorbid (DMI), γ-Valerolacton, Propylenglykoldiacetat, Diethylenglykoldimethylether, Dipropylenglykoldimethylether, Diethylenglykolethyl- und butyletheracetat, N-Methylpyrrolidon und N-Methylcaprolactam, oder beliebige Gemische solcher Lösemittel.

Im Anschluss an die Umsetzung des Polyisocyanates A) mit dem Citrat B), wenn der Gehalt an freien Isocyanatgruppen vorzugsweise 2 oder weniger Gew.-%, bevorzugt 1 oder weniger Gew.-%, besonders bevorzugt 0,5 oder weniger Gew.-% und ganz besonders bevorzugt 0,3 oder weniger Gew.-% beträgt, können die blockierten Polyisocyanate a) gegebenenfalls mit Lösemittel, beispielsweise zur Erniedrigung der Viskosität, weiter verdünnt werden. Dabei können neben den vorstehend genannten Lösemitteln auch alkoholische Lösemittel, wie z. B. n-Butanol oder Isobutylalkohol, verwendet werden, da die Isocyanatgruppen dann weitestgehend, vorzugweise vollständig mit dem Blockierungsmittel abreagiert haben.

Beim Herstellverfahren können gegebenenfalls weitere Hilfs- und Zusatzstoffe, wie z. B. Antioxidatien oder Lichtschutzmittel mitverwendet werden. Diese können entweder einem oder mehreren der Reaktionspartner A), B) und gegebenenfalls dem Katalysator bereits vor Beginn der eigentlichen Umsetzung zugemischt werden. Sie können aber auch zu jedem beliebigen Zeitpunkt während der Umsetzung dem Reaktionsgemisch oder im Anschluss an die Umsetzung den blockierten Polyisocyanaten a) zugegeben werden. Die vorliegend als geeignet und bevorzugt beschriebenen Hilfs- und Zusatzstoffe können als Komponente d) im erfindungsgemäßen Ein-Komponenten-System ebenfalls optional enthalten sein.

Geeignete Antioxidantien sind beispielsweise Phenole, insbesondere sterisch gehinderte Phenole, wie z. B. 2,6-Di-tert-butylphenol, 2,4-Dimethyl-6-tert-butylphenol, 2,6-Di-tert-butyl-4-methylphenol, Triethylenglykol-bis(3-tert-butyl-4-hydroxy-5-methylphenyl)propionat, Octadecyl-3-(3,5-di-tert-butyl-4-hydroxy-phenyl)-propionat, Pentaerythrit-tetrakis(3-(3,5-di-tert-butyl-4-hydroxy-phenyl)propionat), Ester der 3-(3,5-Di-tert-butyl-4-hydroxyphenyl)propionsäure mit aliphatischen verzweigten C7- bis C9-Alkoholen, wie z. B. Isoheptyl-3-(3,5-di-tert-butyl-4-hydroxyphenyl)propionat, Isooctyl-3-(3,5-di-tert-butyl-4-hydroxyphenyl)propionat oder Isononyl-3-(3,5-di-tert-butyl-4-hydroxyphenylpropionat, Isotridecyl-3-(3,5-di-tert-butyl-4-hydroxyphenyl)propionat, Thiodiethyl-bis[3-(3,5-di-tert-butyl-4-hydroxyphenyl)propionat], N,N'-Hexamethylen-bis(3,5-di-tert-butyl-4-hydroxyphenyl)propionsäureamid, 1,2-Bis(3,5-di-tert-butyl-4-hydroxyphenylpropionsäure)hydrazid, 2,4-Di-tert-butylphenyl-4'-hydroxy-3',5'-di-tert-butylbenzoat, Ester der (3,5-di-tert-butyl-4-hydroxyphenyl)methylthioessigsäure mit aliphatischen verzweigten C10- bis C14-Alkoholen, 2,2'-Thio-bis(4-methyl-6-tert-butylphenol), 2-Methyl-4,6-bis(octylthiomethyl)phenol, 1,3,5-Trimethyl-2,4,6-Tris(3,5-di-tert-butyl-4-hydroxybenzyl)benzol, Tris(3,5-di-tert-butyl-4-hydroxybenzyl)isocyanurat oder 2,5-Di-tert-amylhydrochinon.

Geeignete Antioxidantien sind auch Thioether, wie z. B. Didodecyl-3,3'-thiodipropionat oder Dioctadecyl-3,3'-thiodipropionat, die vorzugsweise in Kombination mit phenolischen Antioxidatien der genannten Art eingesetzt werden.

Weitere geeignete Antioxidantien sind Phosphite, beispielsweise di- oder vorzugsqweise trisubstituierte Phosphite, wie z. B. Dibutylphosphit, Dibenzylphosphit, Triethylphosphit, Tributylphosphit, Triisodecylphosphit, Trilaurylphosphit, Tris(tridecyl)phosphit, Triphenylphosphit, Tris(2,4-di-tert-butylphenyl)phosphit, Tris(nonylphenyl)phosphit, Diphenylisooctylphosphit, Diphenyl-isodecylphosphit, Diisodecyl-phenylphosphit, Diisooctyloctylphenylphosphit, Phenyl-neopentylglykolphosphit, 2,4,6-Tri-tert.-butylphenyl-(2-butyl-2-ethyl-1,3-propandiol)phosphit, Diisodecyl-pentaerythritdiphosphit, Distearylpentaerythritdiphosphit, Bis(2,4-di-tert.-butylphenyl)-pen-taerythritdiphosphit oder Tetraphenyl-dipropylenglykoldiphosphit.

Geeignete Lichtschutzmittel sind beispielsweise UV-Absorber vom Typ 2-Hydroxyphenylbenzotriazol, solche vom Typ der am Stickstoffatom substituierten oder unsubstituierten HALS-Verbindungen, wie z. B. Tinuvin^{®} 292 oder Tinuvin^{®} 770 DF (BASF SE, Ludwigshafen, DE), oder solche, wie sie beispielsweise in "Lichtschutzmittel für Lacke" (A. Valet, Vincentz Verlag, Hannover, 1996 und "Stabilization of Polymeric Materials" (H. Zweifel, Springer Verlag, Berlin, 1997, Appendix 3, S. 181-213) beschrieben sind.

Weitere Hilfs- und Zusatzstoffe, die gegebenenfalls beim erfindungsgemäßen Verfahren mitverwendet werden können, sind auch die in EP-A 0 829 500 beschriebenen hydrazidgruppenhaltigen und/oder hydroxyfunktionellen Stabilisatoren, wie z. B. das Additionsprodukt von Hydrazin und Propylencarbonat.

Die genannten Hilfs- und Zusatzstoffe können beim erfindungsgemäßen Verfahren gegebenenfalls einzeln oder auch in beliebigen Kombinationen untereinander in Mengen von 0,001 bis 3,0 Gew.-%, bevorzugt 0,002 bis 2,0 Gew.-%, besonders bevorzugt von 0,005 bis 1,0 Gew.-%, jeweils bezogen auf die Gesamtmenge an Polyisocyanat A), eingesetzt werden.

Unabhängig von der Art der Verfahrensführung liefert das Herstellverfahren völlig klare und transparente, mit Triester der Citronensäure (im Rahmen der vorliegenden Erfindung auch Citrate) blockierte Polyisocyanate oder organische Lösungen solcher Polyisocyanate, die eine erheblich geringere Toxizität des Blockierungsmittels, eine sehr hohe Lager- und Verfestigungsstabilität und niedrige Viskosität aufweisen.

Außerdem ist die Verwendung eines oder mehrerer blockierter Polyisocyanate a), enthaltend zwei oder mehr 2-Carbamoylpropan-1,2,3-tricarboxylat-Strukturen, zur Erniedrigung der Temperatur des Härtungsbeginn und/oder zur Erhöhung der Vergilbungsresistenz von Ein-Komponenten-Systemen eine weitere bevorzugte Ausführungsform der vorliegenden Erfindung. Die blockierten Polyisocyanate a) weisen im Vergleich zu den im Stand der Technik bekannten Produkten deutlich niedrigere Viskositäten auf, so dass sie mit einem höheren Festkörperanteil im erfindungsgemäßen Ein-Komponenten-System genutzt werden können. Daraus ergibt sich der weitere Vorteil einer verbesserten Umweltbilanz.

Die blockierten Polyisocyanate a) stellen wertvolle Ausgangsmaterialien zur Herstellung der erfindungsgemäßen Ein-Komponenten-Systeme dar. Sie eignen sich hervorragend als Vernetzerkomponenten für einkomponentige wärmehärtende lösemittelfreie, lösemittelhaltige oder wässrige Lacksysteme, die insbesondere in der Kunststofflackierung, Automobil-Erstlackierung oder für Coil Coating-Anwendungen zum Einsatz kommen. Somit ist die Verwendung des erfindungsgemäßen Ein-Komponenten-Systems als wärmehärtende lösemittelfreie, lösemittelhaltige oder wässrige Lacksysteme, insbesondere in der Kunststofflackierung, Automobil-Erstlackierung oder für Coil Coating-Anwendungen, ein weiterer Gegenstand der vorliegenden Erfindung. Bei der Verwendung findet die Wärmehärtung bevorzugt durch Einbrennen in Temperaturbereichen von 90 bis 210°C, bevorzugt 105 bis 180 °C, besonders bevorzugt 110 bis 160 °C und ganz besonders bevorzugt 120 bis 140 °C statt.

Für die Herstellung des erfindungsgemäßen Ein-Komponenten-Systems werden die blockierten Polyisocyanate a) mit aus der Lacktechnologie an sich bekannten Lackbindemitteln b), gegebenenfalls unter Mitverwendung von die Vernetzungsreaktion beschleunigenden Katalysatoren c) und gegebenenfalls Lösemitteln und/oder gegebenenfalls Hilfs- und Zusatzstoffen d) vermischt. Das Vermischen muss dabei unterhalb der Temperatur erfolgen, bei der das Blockierungsmittel abgespalten wird, da die Freisetzung der Isocyanatgruppen zu einer vorzeitigen Vernetzung des Lacksystems führen würde. Bevorzugt erfolgt die Herstellung der erfindungsgemäßen Ein-Komponenten-Systeme bei Temperaturen zwischen 15 und 100°C. Vorliegend werden die blockierten Polyisocyanate a) auch als blockierte Polyisocyanatkomponente a) und/oder die Bindemittel b) auch als Bindemittelkomponente b) bezeichnet.

Als Bindemittelkomponente b) enthalten die erfindungsgemäßen Ein-Komponenten-Systeme mindestens ein gegenüber Isocyanatgruppen reaktives Bindemittel mit im statistischen Mittel mindestens zwei isocyanatreaktiven Gruppen, wie z. B. Hydroxyl-, Mercapto-, Amino- oder Carbonsäuregruppen, pro Molekül.

Bevorzugt handelt es sich bei diesen Bindemitteln b) um die üblichen aus der Polyurethanchemie bekannten Di- und/oder Polyhydroxylverbindungen, wie z. B. Polyesterpolyole, Polyetherpolyole, Polycarbonatpolole und/oder Polyacrylatpolyole, oder beliebige Abmischungen solcher Polyole. Bevorzugt umfasst oder besteht das Bindemittel b) Polyesterpolyole, Polyetherpolyole, Polycarbonatpolyole und/oder Polyacrylatpolyole oder beliebige Abmischungen solcher Polyole, vorzugsweise umfasst das Bindemittel b) Polyesterpolyole und/oder Polyacrylatpolyole oder besteht daraus.

Geeignete Polyesterpolyole b) sind beispielsweise solche eines zahlenmittleren, aus Funktionalität und Hydroxylzahl berechenbaren Molekulargewichtes von 500 bis 150 000 g/mol, bevorzugt von 600 bis 30 000 g/mol, weiter bevorzugt von 700 bis 15 000 g/mol, noch weiter bevorzugt 800 bis 10 000 g/mol, besonders bevorzugt 900 bis 5000 g/mol und am meisten bevorzugt 1000 bis 3000 g/mol auf, und/oder mit einem Hydroxylgruppen-Gehalt von 0,03 bis 21 Gew.-%, vorzugsweise 0,1 bis 20 Gew.-%, besonders bevorzugt 1 bis 19 Gew,.% und ganz besonders bevorzugt 2 bis 18 Gew.-%, wie sie sich in an sich bekannter Art und Weise durch Umsetzung von mehrwertigen Alkoholen mit unterschüssigen Mengen an mehrwertigen Carbonsäuren, entsprechenden Carbonsäureanhydriden, entsprechenden Polycarbonsäureestern von niederen Alkoholen oder durch Umsetzung mit Lactonen herstellen lassen.

Geeignete mehrwertige Alkohole zur Herstellung von Polyesterpolyolen b) sind beispielsweise 1,2-Ethandiol, 1,2- und 1,3-Propandiol, die isomeren Butandiole, Pentandiole, Hexandiole, Heptandiole und Oktandiole, 2-Ethyl-2-butyl-1,3-propandiol, 2-Ethyl-2-isobutyl-1,3-propandiol, 1,10-Decandiol, 1,12-Dodecandiol, 2,2,4,4-Tetramethylcyclobutan-1,3-diol (TMCD), 1,2- und 1,4-Cyclohexandiol, 1,4-Cyclohexandimethanol, 1,4-Bis(2-hydroxyethoxy)-benzol, 2,2-Bis-(4-hydroxyphenyl)-propan (Bisphenol A), 2,2-Bis-(4-hydroxycyclohexyl)-propan (Perhydrobisphenol), 1,2,3-Propantriol, 1,2,4-Butantriol, 1,1,1-Trimethylolethan, 1,2,6-Hexantriol, 1,1,1-Trimethylolpropan (TMP), Bis-(2-hydroxyethyl)-hydrochinon, 1,2,4- und 1,3,5-Trihydroxycyclohexan, 1,3,5-Tris(2-hydroxyethyl)-isocyanurat, 3(4),8(9)-Bis-(hydroxymethyl)-tricyclo-[5.2.1.02,6]decane, Di-Trimethylolpropan, 2,2-Bis(hydroxymethyl)-1,3-propandiol (Pentaerythrit), 2,2,6,6-Tetrakis(hydroxymethyl)-4-oxa-heptan-1,7-diol (Dipentaerythrit), Mannitol oder Sorbitol, niedermolekulare Etheralkohole, wie z. B. Diethylenglykol, Triethylenglykol, Tetraethylenglykol, Dipropylenglykol oder Dibutylenglykol oder niedermolekulare Esteralkohole, wie z. B. Hydroxypivalinsäureneopentylglykolester, oder Mischungen aus mindestens zwei solcher Alkohole.

Geeignete Carbonsäuren bzw. Carbonsäurederivate zur Herstellung der in den erfindungsgemäßen Ein-Komponenten-Systemen einzusetzenden Polyesterpolyole b) sind mehrwertige Carbonsäuren, deren Carbonsäureanhydride und Polycarbonsäureester von niederen Alkoholen. Hierbei handelt es sich um beliebige aromatische, aliphatische oder cycloaliphatische, gesättigte oder ungesättigte Di- und Tricarbonsäuren oder deren Anhydride, insbesondere solche mit 4 bis 18 Kohlenstoffatomen, vorzugsweise mit 4 bis 10 Kohlenstoffatomen, wie z. B. Bernsteinsäure, Bernsteinsäureanhydrid, Glutarsäure, Adipinsäure, Pimelinsäure, Korksäure, Azelainsäure, Sebacinsäure, Decandicarbonsäure, Maleinsäure, Maleinsäureanhydrid, Fumarsäure, Itaconsäure, Itaconsäureanhydrid, Hexahydrophthalsäure, Hexahydrophthalsäureanhydrid, Tetrahydrophthalsäure, Phthalsäureanhydrid, Isophthalsäure, Terephthalsäure, Trimellitsäure, Tetrahydrophthalsäureanhydrid, Terephthalsäuredimethylester und Terephthalsäure-bisglykolester aber auch dimere und trimere Fettsäuren, die sowohl einzeln als auch in Form beliebiger Gemische untereinander verwendet werden können.

Gegebenenfalls können zu Herstellung der Polyesterpolyole b) in untergeordneter Menge auch Monocarbonsäuren mitverwendet werden, wie z. B. Benzoesäure, Essigsäure, Propionsäure, Buttersäure oder 2-Ethylhexansäure.

Geeignete Polyesterpolyole b) für die erfindungsgemäßen Ein-Komponenten-Systeme sind auch solche, wie sie sich in an sich bekannter Weise aus Lactonen und mehrwertigen Alkoholen, wie z. B. den oben beispielhaft genannten, als Startermolekülen unter Ringöffnung herstellen lassen. Geeignete Lactone zur Herstellung dieser Polyesterpolyole b) sind beispielsweise β-Propiolacton, γ-Butyrolacton, γ- und δ-Valerolacton, ε-Caprolacton, 3,5,5- und 3,3,5-Trimethylcaprolacton oder beliebige Gemische solcher Lactone.

Die Herstellung dieser Lactonpolyester erfolgt im Allgemeinen in Gegenwart von Katalysatoren wie beispielsweise Lewis- oder Brönstedt-Säuren, organischen Zinn- oder Titanverbindungen bei Temperaturen von 20 bis 200°C, vorzugsweise 50 bis 160°C. Zur Herstellung dieser Polyesterpolyole b) geeignete Aufbaukomponenten sind beispielsweise die vorstehend für die Herstellung der Polyesterpolyole b) als geeignet genannten mehrwertige Alkohole, mehrwertigen Carbonsäuren und deren Derivate, die auch in Form beliebiger Gemische eingesetzt werden können.

Die Herstellung der Polyesterpolyole b) kann nach an sich bekannten Methoden erfolgen, wie sie beispielsweise in E. Gubbels et al., Polyesters. In: Ullmann's Encyclopedia of Industrial Chemistry, Wiley-VCH Verlag GmbH & Co. KgaA; 2018. URL:https://doi.org/10.1002/14356007.a21_227.pub2 ausführlich beschrieben sind. Gegebenenfalls können dabei katalytische Mengen üblicher Veresterungskatalysatoren, wie z. B. Säuren, Basen oder Übergangsmetallverbindungen, wie z.B. Titantetrabutylat, zum Einsatz gelangen. Die Veresterungsreaktion wird im Allgemeinen in einem Temperaturbereich von ca. 80 bis 260°C, vorzugsweise von 100 bis 230°C, so lange durchgeführt, bis die angestrebten Werte für Hydroxyl- und Säurezahl erreicht sind.

Geeignete Polyetherpolyole b) sind beispielsweise solche eines mittleren, aus Funktionalität und Hydroxylzahl berechenbaren Molekulargewichtes von 200 bis 6000, vorzugsweise 250 bis 4000, mit einem Hydroxylgruppen-Gehalt von 0,6 bis 34 Gew.-%, vorzugsweise 1 bis 27 Gew.-%, wie sie in an sich bekannter Weise durch Alkoxylierung geeigneter Startermoleküle zugänglich sind. Zur Herstellung dieser Polyetherpolyole können beliebige mehrwertige Alkohole, wie sie oben als geeignet für die Herstellung der Polyesterpolyole b) beschrieben werden, als Startermoleküle eingesetzt werden.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Geeignete Polycarbonatpolyole b) sind insbesondere die an sich bekannten Umsetzungsprodukte zweiwertiger Alkohole, beispielsweise solcher, wie sie oben in der Liste der mehrwertigen Alkohole beispielhaft genannt sind, mit Diarylcarbonaten, wie z. B. Diphenylcarbonat, Dimethylcarbonat oder Phosgen. Geeignete Polycarbonatpolyole b) sind auch solche, die neben Carbonatstrukturen zusätzlich Estergruppen enthalten. Hierbei handelt es sich insbesondere um die an sich bekannten Polyestercarbonatdiole, wie sie beispielsweise gemäß der Lehre der DE-AS 1 770 245 durch Umsetzung zweiwertiger Alkohole mit Lactonen, wie insbesondere ε-Caprolacton, und anschließende Reaktion der dabei entstehenden Polyesterdiole mit Diphenyl- oder Dimethylcarbonat erhalten werden können. Ebenfalls geeignete Polycarbonatpolyole b) sind solche, die neben Carbonatstrukturen zusätzlich Ethergruppen enthalten. Hierbei handelt es sich insbesondere um die an sich bekannten Polyethercarbonatpolyole, wie sie beispielsweise nach dem Verfahren der EP-A 2 046 861 durch katalytische Umsetzung von Alkylenoxiden (Epoxiden) und Kohlendioxid in Anwesenheit von H-funktionellen Startersubstanzen erhältlich sind.

Geeignete Polyacrylatpoylole b) sind beispielsweise solche eines mittleren aus Funktionalität und Hydroxylzahl berechenbaren oder durch Gelpermeationschromatografie (GPC) bestimmbaren Molekulargewichtes von 800 bis 50000, vorzugsweise von 1000 bis 20000, mit einem Hydroxylgruppengehalt von 0,1 bis 12 Gew.-%, vorzugsweise 1 bis 10, wie sie sich in an sich bekannter Weise durch Copolymerisation Hydroxylgruppen aufweisender olefinisch ungesättigter Monomerer mit hydroxylgruppenfreien olefinischen Monomeren herstellen lassen.

Beispiele für geeignete Monomere zur Herstellung der Polyacrylatpolyole b) sind Vinyl- bzw. Vinylidenmonomere wie z.B. Styrol, α-Methylstyrol, o- bzw. p-Chlorstyrol, o-, m- oder p-Methylstyrol, p-tert.-Butylstyrol, Acrylsäure, Acrylnitril, Methacrylnitril, Acryl- und Methacrylsäureester von Alkoholen mit bis zu 18 Kohlenstoffatomen, wie z. B. Methylacrylat, Ethylacrylat, n-Propylacrylat, Isopropylacrylat, n-Butylacrylat, Isobutylacrylat, tert-Butylacrylat, Amylacrylat, Hexylacrylat, 2-Ethylhexylacrylat, Isooctylacrylat, 3,3,5-Trimethylhexylacrylat, Stearylacrylat, Laurylacrylat, Cyclopentylacrylat, Cyclohexylacrylat, 4-tert.-Butycyclohexylacrylat, Isobornylacrylat, Methylmethacrylat, Ethylmethacrylat, n-Propylmethacrylat, Isopropylmethacrylat, Butylmethacrylat, Isobutylmethacrylat, tert-Butylmethacrylat, Amylmethacrylat, Hexylmethacrylat, 2-Ethylhexylmethacrylat, Isooctylmethacrylat, 3,3,5-Trimethylhexylmethacrylat, Stearylmethacrylat, Laurylmethacrylat, Cyclopentylmethacrylat, Cyclohexylmethacrylat, 4-tert.-Butycyclohexylmethacrylat, Norbornylmethacrylat oder Isobornylmethacrylat, Diester der Fumarsäure, Itaconsäure oder Maleinsäure mit 4 bis 8 Kohlenstoffatome aufweisenden Alkoholen, Acrylsäureamid, Methacrylsäureamid, Vinylester von Alkanmonocarbonsäuren mit 2 bis 5 Kohlenstoffatomen, wie z. B. Vinylacetat oder Vinylpropionat, Hydroxyalkylester der Acrylsäure oder Methacrylsäure mit 2 bis 5 Kohlenstoffatomen im Hydroxyalkylrest, wie z. B. 2-Hydroxyethyl-, 2-Hydroxypropyl-, 3-Hydroxypropyl-, 3-Hydroxybutyl-, 4-Hydroxybutyl-, Trimethylolpropanmono- oder Pentaerythritmonoacrylat oder -methacrylat, sowie beliebige Gemische solcher beispielhaft genannter Monomere.

Die erfindungsgemäßen Ein-Komponenten-Systeme können gegebenenfalls Katalysatoren c) enthalten. Hierbei handelt es sich insbesondere um die oben zur Beschleunigung der Umsetzung der Polyisocyanatkomponente A) mit der Diolkomponente B) und der Aminkomponente C) bereits als geeignet genannten Urethanisierungskatalysatoren, bevorzugt Bismuth(III)-, Zink(II)-, Zinn(II)- und/oder Zinn (IV)- als katalytisch wirkendes Metallion und besonders bevorzugt Bismuth(III)-octoat, Bismuth(III)-triflat, Bismuth(III)-neodecanoat, Zink(II)chlorid, Zink(II)n-octanoat, Zink(II)-2-ethyl-1-hexanoat, Zink-2-ethylcaproat, Zink(II)-stearat, Zink(II)-naphtenat, Zink(II)acetylacetonat, Zinn(II)-n-octanoat, Zinn(II)-2-ethyl-1-hexanoat, Zinn(II)-ethylcaproat, Zinn(II)-laurat, Zinn(II)-palmitat), Zinn(II)-triflat, Zinn(II)-chlorid, Dibutyl-zinn(IV)oxid, Dibutylzinn(IV)-dichlorid, Dibutylzinn(IV)-diacetat, Dibutylzinn(IV)-dimaleat, Dibutylzinn(IV)-dilaurat und/oder Dioctylzinn(IV)-diacetat und ganz besonders bevorzugt Bismuth(III)-octoat, Bismuth(III)-triflat, Bismuth(III)-neodecanoat, Zink(II)n-octanoat, Zink(II)-2-ethyl-1-hexanoat und/oder Dibutylzinn(IV)-dilaurat. Diese Katalysatoren c) kommen in den erfindungsgemäßen Ein-Komponenten-Systemen als Einzelsubstanz oder in Form beliebiger Gemische untereinander in Mengen von 0,001 Gew.-% bis 6 Gew.-%, vorzugsweise von 0,002 Gew.-% bis 5 Gew.-%, besonders bevorzugt von 0,005 Gew.-% bis 2 Gew.-% und ganz besonders bevorzugt von 0,005 Gew.-% bis 1 Gew.-%, berechnet als Summe aller eingesetzten Katalysatoren c) und bezogen auf die Gesamtmenge aus lösemittelfreiem blockierten Polyisocyanat a) und lösemittelfreier Bindemittelkomponente b) zum Einsatz.

Die erfindungsgemäßen Ein-Komponenten-Systeme können gegebenenfalls auch weitere Hilfs- und Zusatzstoffe d) enthalten. Hierbei handelt es sich neben den oben genannten, beim erfindungsgemäßen Verfahren gegebenenfalls mitzuverwendenden Antioxidatien und Lichtschutzmitteln beispielweise um die üblichen, dem Fachmann bekannten Weichmacher, Verlaufshilfsmittel, Rheologieadditive, Slipadditive, Entschäumer, Füllstoffe und/oder Pigmente, die falls überhaupt in der Lacktechnologie üblichen Mengen zum Einsatz kommen. Eine ausführliche Übersicht über derartige geeignete Hilfs- und Zusatzstoffe findet sich beispielsweise in Bodo Müller, "Additive kompakt", Vincentz Network GmbH & Co KG (2009).

Bei der Herstellung der erfindungsgemäßen Ein-Komponenten-Systeme kommen die Polyisocyanatomponente a) und die Bindemittelkomponente b) vorzugsweise in solchen Mengen zum Einsatz, dass das Äquivalentverhältnis der Summe aus blockierten und nicht blockierten Isocyanatgruppen aus a) zu isocyanatreaktiven Gruppen aus b) von 0,5 : 1 bis 1,5 : 1, besonders bevorzugt von 0,7 : 1 bis 1,3 : 1, ganz besonders bevorzugt von 0,8 : 1 bis 1,2 : 1.

Somit ist eine weitere bevorzugte Ausführungsform ein Ein-Komponenten-System für Beschichtungen, umfassend
a) mindestens ein blockiertes Polyisocyanat, enthaltend zwei oder mehr 2-Carbamoylpropan-1,2,3-tricarboxylat-Strukturen,
b) mindestens ein gegenüber Isocyanatgruppen reaktives Bindemittel mit im statistischen Mittel mindestens zwei isocyanatreaktiven Gruppen pro Molekül,
c) gegebenenfalls Katalysatoren und
d) gegebenenfalls Lösemittel und/oder gegebenenfalls Hilfs- und Zusatzstoffe,
wobei a) und b) in einem Äquivalentverhältnis der Summe aus blockierten und nicht blockierten Isocyanatgruppen aus a) zu isocyanatreaktiven Gruppen aus b) von 0,5 : 1 bis 1,5 : 1, besonders bevorzugt von 0,7 : 1 bis 1,3 : 1, ganz besonders bevorzugt von 0,8 : 1 bis 1,2 : 1, vorliegen.

Die der erfindungsgemäßen Ein-Komponenten-Systeme können gegebenenfalls weitere, gegenüber isocyanatreaktiven Gruppen reaktive Verbindungen als zusätzliche Vernetzerkomponente enthalten. Hierbei handelt es sich beispielsweise um Epoxidgruppen enthaltende Verbindungen und/oder Aminoplastharze. Als Aminoplastharze sind die in der Lacktechnologie bekannten Kondensationsprodukte von Melamin und Formaldehyd, bzw. Harnstoff und Formaldehyd anzusehen.

Geeignet sind alle herkömmlichen, nicht oder mit gesättigten Monoalkoholen mit 1 bis 4 Kohlenstoffatomen veretherten Melamin-Formaldehyd-Kondensate. Im Falle der Mitverwendung weiterer Vernetzerkomponenten muss die Menge an Bindemittel mit isocyanatreaktiven Gruppen entsprechend angepasst werden.

Auch Gegenstand der Erfindung ist ein Verfahren zur Herstellung eines Formkörpers oder eines Klebstoffs zwischen zwei Substraten oder einer Beschichtung auf einem Substrat durch Umsetzung eines erfindungsgemäßen Ein-Komponenten-Systems unter Wärmeeinwirkung, bevorzugt durch Einbrennen in Temperaturbereichen von 90 bis 210°C, bevorzugt 105 bis 180°C, besonders bevorzugt 110 bis 160°C, ganz besonders bevorzugt 120°C bis 140°C, oder durch Umsetzung eines nach dem Verfahren erhältlichen oder hergestellten Ein-Komponenten-Systems unter Wärmeeinwirkung, bevorzugt durch Einbrennen in Temperaturbereichen von 90 bis 210°C, bevorzugt 105 bis 180°C, stärker bevorzugt 110 bis 160°C, ganz besonders bevorzugt 120°C bis 140°C.

Auch ein Formkörper oder geklebtes Substrat oder beschichtetes Substrat, umfassend ein gehärtetes erfindungsgemäße Ein-Komponenten-System oder umfassend ein Produkt erhältlich oder hergestellt durch das Verfahren zur Herstellung eines Formkörpers oder eines Klebstoffs oder einer Beschichtung auf einem Substrat, durch Umsetzung eines erfindungsgemäßen Ein-Komponenten-Systems unter Wärmeeinwirkung, bevorzugt durch Einbrennen in Temperaturbereichen von 90 bis 210°C, bevorzugt 105 bis 180°C, besonders bevorzugt 110 bis 160°C, ganz besonders bevorzugt 120°C bis 140°C, sind weitere Gegenstände der vorliegenden Erfindung wie auch ein Substrat, zumindest anteilig beschichtet mit mindestens einem gehärtetem erfindungsgemäßen Ein-Komponenten-System oder zumindest anteilig beschichtet mit mindestens einem gehärtetem Ein-Komponenten-System, erhältlich oder hergestellt nach dem erfindungsgemäßen Verfahren.

Die Applikation der erfindungsgemäßen Ein-Komponenten-Systeme kann nach an sich bekannten Methoden erfolgen, beispielsweise durch Spritzen, Streichen, Tauchen, Fluten oder mit Hilfe von Walzen oder Rakeln in einer oder mehrerer Schichten.

Als Untergründe kommen dabei beliebige Substrate in Betracht, wie z. B. Metall, Holz, Glas, Stein, keramische Materialien, Verbundwerkstoffe oder Kunststoffe aller Art, die vor der Beschichtung gegebenenfalls auch mit üblichen, bekannten Grundierungen, Füllerlackierungen, Basislackierungen und/oder Klarlackierungen versehen werden können.

Das Aushärten der getrockneten Filme erfolgt durch Einbrennen in Temperaturbereichen von 90 bis 210°C, bevorzugt 105 bis 180°C, besonders bevorzugt 110 bis 160°C und ganz, besonders bevorzugt 120 bis 140°C. Die Trockenfilm-Schichtdicke kann dabei beispielsweise 10 bis 120 µm betragen.

Die erfindungsgemäßen Ein-Komponenten-Systeme können auch für die kontinuierliche Bandbeschichtung eingesetzt werden, wobei maximale Einbrenntemperaturen, dem Fachmann als Peak Metal Temperaturen bekannt, zwischen 130 und 300°C, bevorzugt 190 bis 260°C, und/oder Trockenfilm-Schichtdicken von beispielsweise 3 bis 40 µm erreicht werden können. Eine solche Verwendung ist ein weiterer Gegenstand der vorliegenden Erfindung.

Die für das blockierte Polyisocyanat a) beispielhaft und als bevorzugt gekennzeichneten Merkmale und Ausführungsformen sind auch für die weiteren Erfindungsgegenstände bevorzugt.

Die nachfolgenden Beispiele dienen zur Verdeutlichung der vorliegenden Erfindung, sollen aber keinesfalls als Einschränkung des Schutzbereichs verstanden werden.

### Beispiele

Synthesen wurden inert, mittels Schlenktechnik, in zuvor ausgeheizten Glasapparaturen unter trockenem Stickstoff durchgeführt.

Alle Prozentangaben beziehen sich, soweit nicht anders angegeben, auf das Gewicht.

Die Bestimmung der NCO-Gehalte, auch die Bestimmung der Gehalte an freien NCO-Gruppen, erfolgte titrimetrisch nach DIN EN ISO 11909:2007-05.

Der Verlauf der Blockierungsreaktion und die NCO-Freiheit der blockierten Polyisocyanate wurde anhand der Abnahme bzw. des Fehlens der Isocyanatbande (ca. 2270 cm⁻¹) im IR-Spektrum verfolgt.

Die Restmonomerengehalte wurden nach DIN EN ISO 10283:2007-11 gaschromatographisch mit internem Standard gemessen.

Sämtliche Viskositätsmessungen erfolgten mit einem Physica MCR 51 Rheometer der Fa. Anton Paar Germany GmbH (DE) nach DIN EN ISO 3219:1994-10 bei einer Scherrate von 250 s⁻¹.

Dynamisch-mechanische Analyse (DMA):
Analysator DMA 2980 der Fa. TA-Instruments.
Kalibrierung: Temperatur Indium in Glasgewebe
Messung: Dual Cantilever Klemmen
Deformationsamplitude 0,2mm, Anregung 2Hz, Aufheizung von RT auf +250'C, Heizrate 2K/min

### Chemikalien und Ausgangsverbindungen:

Triethylcitrat (Merck KGaA, Sigma Aldrich Deutschland)
MEKO (Merck KgaA, Sigma Aldrich Deutschland)
ε-Caprolactam (Merck KgaA, Sigma Aldrich Deutschland)
Hexamethylendiisocyanat HDI (Desmodur^{®} H, Covestro Deutschland AG)
Desmodur^{®} BL 3175 (MEKO blockiertes HDI-Polyisocyanat, Covestro Deutschland AG)
Desmodur^{®} BL 3272 (ε-Caprolactam blockiertes HDI-Polyisocyanat, Covestro Deutschland AG)
Desmophen 650 MPA (verzweigtes Polyesterpolyol, OH Zahl: ca. 5,3; Säurezahl: <3 mg KOH/g, Covestro Deutschland AG)
Desmorapid^{®} SO (Zinnoctoat, Covestro Deutschland AG)
Butylacetat (Azelis Deutschland GmbH)
Solvent Naphtha 150 ND (S 150 ND) (DHC Solvent Chemie GmbH)
Borchi^{®} Kat 24 (Bismuthoctoat, Borchers GmbH)
Setalux^{®} A 870 BA (Polyacrylat, OH-Zahl: ca. 2.8-3.1; Säurezahl: ca. 7.5 mg KOH/g, Allnex Germany GmbH)

### Anwendungstechnische Prüfungen:

Pendulum-Dämpfung nach König wurde gemäß DIN EN ISO 1522 auf Glasplatten durchgeführt.

Die Bestimmung der Lösungsmittel- und Wasserbeständigkeiten wurden nach DIN EN ISO 4628-1 durchgeführt. Für den Test der Lösungsmittelbeständigkeiten wurden Xylol, Methoxypropylacetat (MPA), Ethylacetat (EA) und Aceton getestet. Die Kontaktzeit betrug jeweils 5 min. Für die Messung der Wasserbeständigkeiten betrug die Kontaktzeit jeweils 1 h. Die Abmusterung wurde entsprechend der angeführten Norm durchgeführt. Die Prüffläche wurde visuell und durch Verkratzung beurteilt, dabei wurde folgende Klassifikation vorgenommen: 0 = Keine Veränderung feststellbar; 1 = Quellungsring, Oberfläche hart, nur sichtbare Veränderung; 2 = Quellungsring, geringe Erweichung; 3 = deutlich Erweichung; 4 = Starke Erweichung, durchritzbar bis zum Untergrund; 5 = Beschichtung komplett zerstört ohne Fremdeinwirkung.

### Thermovergilbung:

Lacke wurden mittels Rakel auf Glasplatten aufgezogen und im Ofen bei jeweils 140°C, 160°C und 180°C für 30 min eingebrannt. Die Trockenschichtdicke betrug zwischen 25 und 40 µm. Die Ausgangsvergilbung der getrockneten Lackfilme wurde mittels Spektralphotometer (Typ SP60) der Fa. X-Rite an drei verschiedenen Stellen gemessen. Anschließend wurden die Glasplatten für weitere 30 min, jedoch bei einer +20°C höheren Temperatur als beim Einbrennvorgang, eingebrannt. Nach Abkühlen wurde die Thermovergilbung der Lacke an drei verschiedenen Stellen erneut gemessen.

### Ausgangspolyisocyanate

### Polyisocyanat 1:

Isocyanuratgruppen enthaltendes Polyisocyanat auf Basis von HDI, hergestellt nach EP 330 966.

1000 g Hexamethylendiisocyanat (HDI) wurden in einen Vierhalskolben, ausgestattet mit Rührer, Rückflusskühler, N₂-Durchleitungsrohr und Innenthermometer, vorgelegt, dreimal bei Raumtemperatur durch Anlegen eines Vakuums von ca. 50 mbar entgast und mit Stickstoff belüftet. Anschließend wurde zur Einleitung der Trimerisierungreaktion 12 g einer Katalysatorlösung, 0,5 %ige (2-Hydroxyethyl)trimethylammoniumhydroxid, in einem 1:1-Gemisch aus Methanol und 2-Ethylhexan-1,3-diol, innerhalb von 30 min hinzugetropft und langsam auf 70°C erhitzt. Die Mischung erhitzte sich auf ca. 75°C und wurde für eine Stunde bei dieser Temperatur gerührt. Anschließend wurden weitere 12 g Katalysatorlösung hinzugetropft und die Reaktionsmischung so lange gerührt, bis ein NCO-Gehalt von 38,0 % erreicht wurde. Die Reaktion wurde equimolar (bezogen auf Katalysatorbeladung) mit Dibutylphosphat (25 %ig in HDI) abgestoppt und anschließend mittels Dünnschichtdestillation (130 °C, 0,1 mbar) von überschüssigem HDI befreit. Es wurde ein farbloses Polyisocyanuratpolyisocyanat mit folgenden Kenndaten erhalten:

| | |
|---|---|
| NCO-Gehalt: | 21,7 Gew.-% |
| Gehalt an monomerem HDI: | < 0,1 % |
| Festkörpergehalt: | 100 % |
| Viskosität (23°C): | 3000 mPas |

### Blockierte Polyisocyanate

### Blockiertes Polyisocyanat 1:

Polyisocyanat 1 (986,4 g, 1,0 val) wurde in Butylacetat (800,3 g) gelöst. Zu dieser Lösung wurde unter trockenem Stickstoff und mechanischem Rühren Triethylcitrat (1414,6 g, 1,0 val) hinzugetropft. Anschließend wurde die Reaktionsmischung auf 50°C erhitzt, mit Desmorapid^{®} SO (100 ppm) versetzt und so lange gerührt, bis alle NCO-Gruppen umgesetzt wurden (festgestellt mittels IR-Spektroskopie). Es wurde ein farbloses, blockiertes Polyisocyanat mit folgenden Kenndaten erhalten:

| | |
|---|---|
| Freier NCO-Gehalt: | 0,0% |
| Blockierter NCO-Gehalt: | 6,7% |
| Festkörpergehalt: | 75% |
| Viskosität (23°C): | 1180 mPas |

### Blockiertes Polyisocyanat 2:

Desmodur^{®} BL 3175, ein MEKO blockiertes HDI -Polyisocyanat

| | |
|---|---|
| Blockierter NCO-Gehalt: | 11.1% |
| Festkörpergehalt: | 75% |
| Viskosität (23°C): | 3300 mPas |

### Blockiertes Polyisocyanat 3:

Desmodur^{®} BL 3272, ein ε-Caprolactam blockiertes HDI-Polyisocyanat

| | |
|---|---|
| Blockierter NCO-Gehalt: | 10.2% |
| Festkörpergehalt: | 72% |
| Viskosität (23°C): | 2700 mPas |

### Ein-Komponenten-Systeme (1K-PUR-Systeme)

### Beispiel 1 (erfindungsgemäß):

Blockiertes Polyisocyanat 1 (7.82 g) wurde mit Setalux^{®} A 870 BA (OH-funktionelles Polyacrylatpolyol 70%ig gelöst in Butylacetat, 7.18 g) versetzt. Zu dieser Mischung wurde eine 10%ige Katalysatorlösung in Butylacetat (Borchi^{®} Kat 24) hinzugegeben (1.09 g, entspricht ca. 1% auf Festharz). Die Mischung wurde mittels Speedmixer (30s bei 2800 U/min) homogenisiert. Es wurde ein klarer Lack mit einem Festkörpergehalt von 68% erhalten.

### Beispiel 2 (Vergleich):

Blockiertes Polyisocyanat 2 (5.95 g) wurde mit Setalux^{®} A 870 BA (OH-funktionelles Polyacrylatpolyol 70%ig gelöst in Butylacetat, 9.05 g) versetzt. Zu dieser Mischung wurde eine 10%ige Katalysatorlösung in Butylacetat (Borchi^{®} Kat 24) hinzugegeben (1.09 g, entspricht ca. 1% auf Festharz). Die Mischung wurde mittels Speedmixer (30s bei 2800 U/min) homogenisiert. Es wurde ein klarer Lack mit einem Festkörpergehalt von 68% erhalten.

### Beispiel 3 (Vergleich):

Blockiertes Polyisocyanat 3 (6.26 g) wurde mit Setalux^{®} A 870 BA (OH-funktionelles Polyacrylatpolyol 70%ig gelöst in Butylacetat, 8.74 g) versetzt. Zu dieser Mischung wurde eine 10%ige Katalysatorlösung in Butylacetat (Borchi^{®} Kat 24) hinzugegeben (1.09 g, entspricht ca. 1% auf Festharz). Die Mischung wurde mittels Speedmixer (30s bei 2800 U/min) homogenisiert. Es wurde ein klarer Lack mit einem Festkörpergehalt von 67% erhalten.

### Beispiel 4 (erfindungsgemäß):

Blockiertes Polyisocyanat 1 (7.82 g) wurde mit Setalux^{®} A 870 BA (OH-funktionelles Polyacrylatpolyol 70%ig gelöst in Butylacetat, 7.18 g) versetzt. Zu dieser Mischung wurde eine 10%ige Katalysatorlösung in Butylacetat (Borchi^{®} Kat 24) hinzugegeben (5.45 g, entspricht ca. 5% auf Festharz). Die Mischung wurde mittels Speedmixer (30s bei 2800 U/min) homogenisiert. Es wurde ein klarer Lack mit einem Festkörpergehalt von 56% erhalten.

### Beispiel 5 (Vergleich):

Blockiertes Polyisocyanat 2 (5.95 g) wurde mit Setalux^{®} A 870 BA (OH-funktionelles Polyacrylatpolyol 70%ig gelöst in Butylacetat, 9.05 g) versetzt. Zu dieser Mischung wurde eine 10%ige Katalysatorlösung in Butylacetat (Borchi^{®} Kat 24) hinzugegeben (5.40 g, entspricht ca. 5% auf Festharz). Die Mischung wurde mittels Speedmixer (30s bei 2800 U/min) homogenisiert. Es wurde ein klarer Lack mit einem Festkörpergehalt von 56% erhalten.

### Beispiel 6 (erfindungsgemäß):

Blockiertes Polyisocyanat 1 (12.36 g) wurde mit Desmophen^{®} 650 (OH-funktionelles Polyesterpolyol 65%ig gelöst in Methoxypropylacetat, 6.31 g) versetzt. Zu dieser Mischung wurde eine 25%ige Katalysatorlösung in Methoxypropylacetat (Borchi^{®} Kat 24) hinzugegeben (0.54 g, entspricht ca. 1% auf Festharz). Die Mischung wurde mittels Speedmixer (30s bei 2800 U/min) homogenisiert. Es wurde ein klarer Lack mit einem Festkörpergehalt von 70% erhalten.

### Beispiel 7 (Vergleich):

Blockiertes Polyisocyanat 2 (8.12 g) wurde mit Desmophen^{®} 650 (OH-funktionelles Polyesterpolyol 65%ig gelöst in Methoxypropylacetat, 6.88 g) versetzt. Zu dieser Mischung wurde eine 25%ige Katalysatorlösung in Methoxypropylacetat (Borchi^{®} Kat 24) hinzugegeben (0.42 g, entspricht ca. 1% auf Festharz). Die Mischung wurde mittels Speedmixer (30s bei 2800 U/min) homogenisiert. Es wurde ein klarer Lack mit einem Festkörpergehalt von 69% erhalten.

### Beispiel 8 (Vergleich):

Blockiertes Polyisocyanat 3 (8.44 g) wurde mit Desmophen^{®} 650 (OH-funktionelles Polyesterpolyol 65%ig gelöst in Methoxypropylacetat, 6.56 g) versetzt. Zu dieser Mischung wurde eine 25%ige Katalysatorlösung in Methoxypropylacetat (Borchi^{®} Kat 24) hinzugegeben (0.42 g, entspricht ca. 1% auf Festharz). Die Mischung wurde mittels Speedmixer (30s bei 2800 U/min) homogenisiert. Es wurde ein klarer Lack mit einem Festkörpergehalt von 69% erhalten.

### Beispiel 9 (erfindungsgemäß):

Blockiertes Polyisocyanat 1 (6.62 g) wurde mit Desmophen^{®} 650 (OH-funktionelles Polyesterpolyol 65%ig gelöst in Methoxypropylacetat, 3.38 g) versetzt. Zu dieser Mischung wurde eine 10%ige Katalysatorlösung in Methoxypropylacetat (Addocat 201) hinzugegeben (0.72 g, entspricht ca. 1% auf Festharz). Die Mischung wurde mittels Speedmixer (30s bei 2800 U/min) homogenisiert. Es wurde ein klarer Lack mit einem Festkörpergehalt von 68% erhalten.

### Beispiel 10 (Vergleich):

Blockiertes Polyisocyanat 2 (4.57 g) wurde mit Desmophen^{®} 650 (OH-funktionelles Polyesterpolyol 65%ig gelöst in Methoxypropylacetat, 5.43 g) versetzt. Zu dieser Mischung wurde eine 10%ige Katalysatorlösung in Methoxypropylacetat (Borchi^{®} Kat 24) hinzugegeben (0.70 g, entspricht ca. 1% auf Festharz). Die Mischung wurde mittels Speedmixer (30s bei 2800 U/min) homogenisiert. Es wurde ein klarer Lack mit einem Festkörpergehalt von 66% erhalten.

### Beispiel 11 (Vergleich):

Blockiertes Polyisocyanat 3 (8.44 g) wurde mit Desmophen^{®} 650 (OH-funktionelles Polyesterpolyol 65%ig gelöst in Methoxypropylacetat, 6.56 g) versetzt. Zu dieser Mischung wurde eine 10%ige Katalysatorlösung in Methoxypropylacetat Addocat 201) hinzugegeben (1.03 g, entspricht ca. 1% auf Festharz). Die Mischung wurde mittels Speedmixer (30s bei 2800 U/min) homogenisiert. Es wurde ein klarer Lack mit einem Festkörpergehalt von 65% erhalten.

### DMA-Analysen:

Um bestimmen zu können, in welchen Temperaturbereichen sich die 1K-PUR-Systeme einbrennen lassen, wurden DMA-Analysen durchgeführt.

**Tabelle 1: DMA-Analysen der beschriebenen 1K-PUR-Systeme zur Bestimmung der Deblockierungstemperaturen von verschiedenen Blockierungsmitteln, katalysiert mit 1 Gew.% Borchi^{®}Kat24.**

| Beispiel | Blockierungsmittel | Härtungsbeginn [°C] | Härtungs-Onset [°C] | Polyol |
|---|---|---|---|---|
| 1 (erfindungsgemäß) | Triethylcitrat | 110 | 127 | Setalux^{®} DA 870 BA |
| 2 (Vergleich) | MEKO | 124 | 130 | |
| 3 (Vergleich) | ε-Caprolactam | 154 | 159 | |
| 6 (erfindungsgemäß) | Triethylcitrat | 108 | 117 | Desmophen^{®} 650 |
| 7 (Vergleich) | MEKO | 120 | 126 | |
| 8 (Vergleich) | ε-Caprolactam | 122 | 128 | |

Die DMA-Analysen aus Tabelle 1 belegen, dass Polyisocyanate die mit Trialkylcitraten, wie Triethylcitrat, blockiert sind bei einer geringeren Temperatur deblockieren, als MEKO und ε-Caprolactam. Die Härtung von Triethylcitrat blockierten Isocyanaten ist katalysiert bereits ab 110°C (Polyacrylat) bzw. 108°C (Polyester) möglich, wohingegen Isocyanate die mit MEKO oder ε-Caprolactam blockiert wurden erst ab 124°C/120°C bzw. 154/122°C gehärtet werden können.

### Anwendungstechnische Prüfung:

Die oben genannten Ein-Komponenten-Systeme wurden mittels Rakel auf Glasplatten appliziert und im Ofen eingebrannt. Die Einbrennbedingungen sowie erhaltene anwendungstechnische Ergebnisse sind in den folgenden Tabellen zusammengefasst:

**Tabelle 2: Anwendungstechnische Prüfergebnisse der Beispiele 1 bis 3.**

| **Bezeichnung** | | **Beispiel 1** (erfindungsgemäß) | **Beispiel 2** (Vergleich) | **Beispiel 3** (Vergleich) |
|---|---|---|---|---|
| **Blockierungsmittel** | | Triethylcitrat | MEKO | E-CAP |
| **Katalysator** | | Borchi Kat 24 | | |
| **Menge auf Festharz** | | 1.0% | | |
| **Polyol** | | Setalux A870 | | |
| **NCO /OH ratio** | | 1:1 | | |
| **Einbrenntemperatur** | | **30 min, 160°C** | | |
| **Potlife** | | > 24h | | |
| **Visuelle Beurteilung des Lacks** | | klar, farblos | | |
| **Pendeldämpfung-König nach 24h [s]** | | 207 | 181 | 183 |
| **Lösungsmittelbeständigkeit (nach 7d)** | | | | |
| Xylol/MPA/EA/Aceton | 1min | 1/1/1/1 | 1/1/1/1 | 2/2/2/3 |
| | 5min | 1/1/3/3 | 1/1/2/3 | 3/3/3/3 |
| Destilliertes Wasser | 1h | 0 | 0 | 0 |

Aus Tabelle 2 wird ersichtlich, dass mit dem erfindungsgemäßen 1-K-PUR-System aus Beispiel 1 nach Einbrennen bei 160°C sehr gute Lösungsmittel- und Wasserbeständigkeiten erreicht werden, die mit dem 1-K-PUR-System des MEKO blockierten Polyisocyanat aus Beispiel 2 vergleichbar sind. Gleichzeitig wird deutlich, dass mit der Formulierung aus Beispiel 1 bessere Beständigkeiten erzielt werden als mit dem ε-Caprolactam blockierten Ein-Komponenten-System aus Beispiel 3. Des Weiteren weist der Lack auf Basis des Beispiels 1 eine höhere Pendeldämpfung nach König auf als die Lacke aus Vergleichsbeispielen 2 und 3.

**Tabelle 3: Anwendungstechnische Prüfergebnisse der Beispiele 4 und 5.**

| **Bezeichnung** | | **Beispiel 4** (erfindungsgemäß) | **Beispiel 5** (Vergleich) |
|---|---|---|---|
| **Blockierungsmittel** | | Triethylcitrat | MEKO |
| **Katalysator** | | Borchi Kat 24 | |
| **Menge auf Festharz** | | **5.0%** | |
| **Polyol** | | Setalux A870 | |
| **NCO /OH ratio** | | 1:1 | |
| **Einbrenntemperatur** | | **30min 120°C** | |
| **Potlife** | | > 24h | |
| **Visuelle Beurteilung des Lacks** | | klar, farblos | |
| **Pendeldämpfung nach König [s]** | | 190 | 135 |
| **Lösungsmittelbeständigkeit (nach 7d)** | | | |
| Xylol/MPA/EA/Aceton | 1min | 1,1,1,3 | 2,3,3,4 |
| | 5min | 3,1,3,3 | 2,3,3,5 |
| Destilliertes Wasser | 1h | 0 | 3 |

Die Ergebnisse aus Tabelle 3 machen deutlich, dass durch eine Erhöhung der Katalysatorkonzentration auf 5% eine Verringerung der Einbrenntemperatur auf 120°C möglich ist, wobei die Beschichtung, hergestellt aus dem erfindungsgemäßen Beispiel 4, noch gute bis sehr gute Beständigkeiten und eine sehr hohe Pendeldämpfung aufweist. Beschichtungen welche auf Basis der Formulierung aus Beispiel 5 bei 120°C eingebrannt werden, weisen jedoch schlechtere Beständigkeiten und eine niedrigere Pendeldämpfung auf. Formulierungen auf Basis ε-Caprolactam reagieren unter diesen Bedingungen nicht aus.

**Tabelle 4: Anwendungstechnische Prüfergebnisse Beispiele 6 bis 8.**

| **Bezeichnung** | | **Beispiel 6** | **Beispiel 7** | **Beispiel 8** |
|---|---|---|---|---|
| **Blockierungsmittel** | | Triethylcitrat (erfindungsgemäß) | MEKO (Vergleich) | E-CAP (Vergleich) |
| **Katalysator** | | Borchi Kat 24 | | |
| **Menge auf Festharz** | | 1.0% | | |
| **Polyol** | | Desmophen 650 | | |
| **NCO /OH ratio** | | 1:1 | | |
| **Einbrenntemperatur** | | 30min 140°C | | 30 min 160°C |
| **Potlife** | | > 24h | | |
| **Visuelle Beurteilung des Lacks** | | klar, farblos | | |
| **Pendeldämpfung-König nach 24h [s]** | | 203 | 182 | 220 |
| **Lösungsmittelbeständigkeit (nach 7d)** | | | | |
| Xylol/MPA/EA/Aceton | 1min | 0/0/0/0 | 0/0/0/0 | 1/1/2/2 |
| | 5min | 0/0/0/0 | 0/0/0/1 | 2/2/2/2 |
| Destilliertes Wasser | 1h | 0 | 0 | 0 |

1-K-PUR-Systeme, enthaltend Trialkylcitrat-blockiertes Polyisocyanat in Kombination mit Polyester-Polyolen (Beispiel 6), weisen nach Einbrennen bei 140°C ebenfalls außerordentlich hohe Lösungsmittel- und Wasserbeständigkeiten auf, wie aus Tabelle 4 ersichtlich, welche ε-Caprolactam blockierten Systemen deutlich überlegen, und mit MEKO-blockierten Systemen vergleichbar sind. Des Weiteren zeigt sich, dass mit dem erfindungsgemäßen 1K-PUR-System aus Beispiel 6 beides, sowohl exzellente Lösungsmittel- und Wasserbeständigkeiten, als auch eine außerordentlich hohe Oberflächenhärte (Pendeldämpfung) erzielt wird.

**Tabelle 5: Thermovergilbung Beispiel 9.**

| | | | |
|---|---|---|---|
| **Einbrennbedingungen** | 30 min, 140°C | 30 min, 160°C | 30 min, 180°C |
| **Überbrennbedingungen** | 30 min, 160°C | 30 min, 180°C | 30 min, 200°C |
| **Beispiel** | **9** (erfindungsgemäß) | | |
| **Blockierungsmittel** | Triethylcitrat | | |
| **Polyol** | Desmophen 650 | | |
| **Vergilbung nach Einbrennen b*** | -3.02 | -2.30 | -2.74 |
| **Vergilbung nach Überbrennen b*** | -4.24 | -3.93 | -2.80 |
| **Vergilbungsdifferenz Δb** | -1.22 | -1.63 | -0.06 |

**Tabelle 6: Thermovergilbung Beispiel 10.**

| | | | |
|---|---|---|---|
| **Einbrennbedingungen** | 30 min, 140°C | 30 min, 160°C | 30 min, 180°C |
| **Überbrennbedingungen** | 30 min, 160°C | 30 min, 180°C | 30 min, 200°C |
| **Beispiel** | **10** (Vergleich) | | |
| **Blockierungsmittel** | MEKO | | |
| **Polyol** | Desmophen 650 | | |
| **Vergilbung nach Einbrennen b*** | -3.14 | -2.67 | -1.39 |
| **Vergilbung nach Überbrennen b*** | -2.93 | -1.86 | +1.97 |
| **Vergilbungsdifferenz Δb** | +0.22 | +0.81 | +3.36 |

**Tabelle 7: Thermovergilbung Beispiel 11.**

| | | | |
|---|---|---|---|
| **Einbrennbedingungen** | 30 min, 140°C | 30 min, 160°C | 30 min, 180°C |
| **Überbrennbedingungen** | 30 min, 160°C | 30 min, 180°C | 30 min, 200°C |
| **Beispiel** | **11** (Vergleich) | | |
| **Blockierungsmittel** | E-CAP | | |
| **Polyol** | Desmophen 650 | | |
| **Vergilbung nach Einbrennen b*** | -4.57 | -4.43 | -3.41 |
| **Vergilbung nach Überbrennen b*** | -4.40 | -3.63 | -0.26 |
| **Vergilbungsdifferenz Δb** | +0.16 | +0.79 | +3.14 |

Aus den Tabellen 5 bis 7 wird deutlich, dass die Vergilbungsneigung des erfindungsgemäßen Ein-Komponenten-Systems enthaltend das Trialkylcitrat blockierte Polyisocyanat (Beispiel 9), den Vergleichsbeispielen 10 und 11 deutlich überlegen ist. Selbst bei sehr hohen Einbrenn-und Überbrennbedingungen neigt das erfindungsgemäße 1K-PUR-System kaum zur Vergilbung.

## Patentansprüche

1. Ein-Komponenten-System für Beschichtungen, umfassend
a) mindestens ein blockiertes Polyisocyanat, enthaltend zwei oder mehr 2-Carbamoylpropan-1,2,3-tricarboxylat-Strukturen,
b) mindestens ein gegenüber Isocyanatgruppen reaktives Bindemittel mit im statistischen Mittel mindestens zwei isocyanatreaktiven Gruppen pro Molekül,
c) gegebenenfalls Katalysatoren und
d) gegebenenfalls Lösemittel und/oder gegebenenfalls Hilfs- und Zusatzstoffe.

2. Ein-Komponenten-System gemäß Anspruch 1, **dadurch gekennzeichnet, dass** das blockierte Polyisocyanat a) zusätzlich eine oder mehrere Isocyanurat-, Allophanat-, Urethan-, Harnstoff-, Uretdion-, Iminooxadiazindion-, Oxadiazintrion- und/oder Biuretstruktur enthält.

3. Ein-Komponenten-System gemäß einem der Ansprüche 1 oder 2, **dadurch gekennzeichnet, dass** die zwei oder mehr 2-Carbamoylpropan-1,2,3-tricarboxylat-Strukturen des blockierten Polyisocyanates a) eine allgemeine Formel (I), 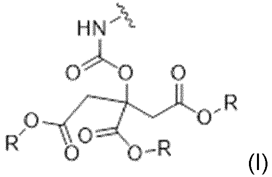 aufweisen, in welcher
R unabhängig voneinander für einen beliebigen gesättigten oder ungesättigten, linearen oder verzweigten, aliphatischen Rest mit 1 bis 18 Kohlenstoffatomen, gesättigten oder ungesättigten cycloaliphatischen Rest mit 3 bis 18 Kohlenstoffatomen, araliphatischen Rest mit 7 bis 18 Kohlenstoffatomen und/oder aromatischen Rest mit 6 bis 18 Kohlenstoffatomen steht, der jeweils substituiert oder unsubstituiert ist und/oder Heteroatome in der Kette aufweist.

4. Ein-Komponenten-System gemäß einem der Ansprüche 1 bis 3, **dadurch gekennzeichnet, dass** die zwei oder mehr 2-Carbamoylpropan-1,2,3-tricarboxylat-Strukturen des blockierten Polyisocyanates a) eine allgemeine Formel (I), 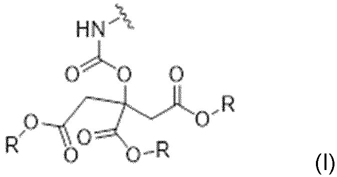 aufweisen, in welcher
R unabhängig voneinander für einen beliebigen gesättigten oder ungesättigten, linearen oder verzweigten, aliphatischen Rest mit 1 bis 8 Kohlenstoffatomen und/oder gesättigten oder ungesättigten cycloaliphatischen Rest mit 5 bis 8 Kohlenstoffatomen steht, der jeweils substituiert oder unsubstituiert ist und/oder Heteroatome in der Kette aufweist, vorzugsweise in welcher R unabhängig voneinander für einen beliebigen gesättigten oder ungesättigten, linearen oder verzweigten, aliphatischen Rest mit 1 bis 4 Kohlenstoffatomen steht, der jeweils substituiert oder unsubstituiert ist und/oder Heteroatome in der Kette aufweist, besonders bevorzugt in welcher R unabhängig voneinander für einen beliebigen gesättigten oder ungesättigten, linearen oder verzweigten, aliphatischen Rest mit 2 bis 4 Kohlenstoffatomen steht.

5. Ein-Komponenten-System gemäß einem der Ansprüche 1 bis 4, **dadurch gekennzeichnet, dass** zur Herstellung der blockierten Polyisocyanatkomponente a) als Polyisocyanat A) Polyisocyanate zum Einsatz kommen, die einen Gehalt an Isocyanatgruppen von 6,0 bis 26,0 Gew.-%, vorzugsweise von 8,0 bis 25,0 Gew.-%, besonders bevorzugt 10,0 bis 24,0 Gew.-%, und/oder einen Gehalt an monomeren Diisocyanaten von weniger als 0,50 Gew.-%, vorzugsweise weniger als 0,30 Gew.-%, stärker bevorzugt weniger als 0,20 Gew.-%, besonders bevorzugt von weniger als 0,10 Gew.-% aufweisen.

6. Ein-Komponenten-System gemäß einem der Ansprüche 1 bis 5, **dadurch gekennzeichnet, dass** das Bindemittel b) Polyesterpolyole, Polyetherpolyole, Polycarbonatpolyole und/oder Polyacrylatpolyole oder beliebige Abmischungen solcher Polyole umfasst oder daraus besteht, vorzugsweise Polyesterpolyole und/oder Polyacrylatpolyole umfasst oder daraus besteht.

7. Ein-Komponenten-System gemäß einem der Ansprüche 1 bis 6, **dadurch gekennzeichnet, dass** das Bindemittel b) in einer solchen Menge zum Einsatz kommt, dass das Äquivalentverhältnis der Summe aus blockierten und nicht blockierten Isocyanatgruppen der Polyisocyanatkomponente a) zu isocyanatreaktiven Gruppen des Bindemittels b) von 0,5 : 1 bis 1,5 : 1, besonders bevorzugt von 0,7 : 1 bis 1,3 : 1, ganz besonders bevorzugt von 0,8 : 1 bis 1,2 : 1 beträgt.

8. Ein-Komponenten-System gemäß einem der Ansprüche 1 bis 7, **dadurch gekennzeichnet, dass** ein oder mehrere Katalysatoren c) in Mengen von 0,001 Gew.-% bis 6 Gew.-%, vorzugsweise von 0,002 Gew.-% bis 5 Gew.-%, besonders bevorzugt von 0,005 Gew.-% bis 2 Gew.-% und ganz besonders bevorzugt von 0,005 Gew.-% bis 1 Gew.-%, berechnet als Summe aller eingesetzten Katalysatoren c) und bezogen auf die Gesamtmenge aus lösemittelfreiem blockierten Polyisocyanat a) und lösemittelfreier Bindemittelkomponente b) umfasst sind.

9. Verfahren zur Herstellung von Ein-Komponenten-Systemen gemäß einem der Ansprüche 1 bis 8, **dadurch gekennzeichnet, dass** die blockierte Polyisocyanatkomponente a) mit dem Bindemittel b), gegebenenfalls unter Mitverwendung von die Vernetzungsreaktion beschleunigenden Katalysatoren c) und gegebenenfalls Lösemitteln und/oder gegebenenfalls Hilfs- und Zusatzstoffen d) bei Temperaturen unterhalb der Deblockierungstemperatur der Komponente a), vorzugsweise bei Temperaturen zwischen 15 und 100°C vermischt wird.

10. Verfahren zur Herstellung eines Formkörpers oder eines Klebstoffs zwischen zwei Substraten oder einer Beschichtung auf einem Substrat durch Umsetzung eines Ein-Komponenten-Systems gemäß einem der Ansprüche 1 bis 8 unter Wärmeeinwirkung, bevorzugt durch Einbrennen in Temperaturbereichen von 90 bis 210°C, bevorzugt 110 bis 160°C, besonders bevorzugt 120 bis 140°C, oder durch Umsetzung eines nach dem Verfahren gemäß Anspruch 9 erhältlichen oder hergestellten Ein-Komponenten-Systems unter Wärmeeinwirkung, bevorzugt durch Einbrennen in Temperaturbereichen von 90 bis 210°C, besonders bevorzugt 110 bis 160°C, besonders bevorzugt 120 bis 140°C.

11. Verwendung des Ein-Komponenten-Systeme gemäß einem der Ansprüche 1 bis 8 als wärmehärtende lösemittelfreie, lösemittelhaltige oder wässrige Lacksysteme, bevorzugt findet die Wärmehärtung durch Einbrennen in Temperaturbereichen von 90 bis 210°C, bevorzugt 110 bis 160°C, besonders bevorzugt 120 bis 140°C erfolgt.

12. Verwendung der Ein-Komponenten-Systeme gemäß einem der Ansprüche 1 bis 8 in Coil Coating-Anwendungen bei Peak Metal Temperaturen zwischen 130 und 300°C, vorzugsweise 190 bis 260°C.

13. Formkörper oder geklebtes Substrat, umfassend ein gehärtetes Ein-Komponenten-System gemäß einem der Ansprüche 1 bis 8 oder umfassend ein Produkt erhältlich oder hergestellt durch das Verfahren gemäß Anspruch 10 oder 11.

14. Substrat, zumindest anteilig beschichtet mit mindestens einem gehärtetem Ein-Komponenten-System gemäß einem der Ansprüche 1 bis 8 oder zumindest anteilig beschichtet mit mindestens einem gehärtetem Ein-Komponenten-System, erhältlich oder hergestellt nach dem Verfahren gemäß Anspruch 10 oder 11.
